# EUROPEAN PATENT SPECIFICATION

(11) **EP 4 191 548 B1**
(45) Date of publication and mention of the grant of the patent: **07.10.2026**
(21) Application number: 22204468.7
(22) Date of filing: 28.10.2022
(51) Int. Cl.: G07D 11/24, G07D 11/34

(54) **METHOD OF VERIFYING NUMBER OF MEDIA IN MEDIA STORAGE UNIT**
VERFAHREN ZUR ÜBERPRÜFUNG DER ANZAHL VON MEDIEN IN EINER MEDIENSPEICHEREINHEIT
PROCÉDÉ DE VÉRIFICATION DU NOMBRE DE SUPPORTS DANS UNE UNITÉ DE STOCKAGE DE SUPPORTS

(30) Priority: 28.10.2021 KR 20210145604; 18.11.2021 KR 20210159013; 08.08.2022 KR 20220098418
(43) Date of publication of application: 07.06.2023
(73) Proprietor: HYOSUNG TNS INC., Gangnam-gu, Seoul 06349 (KR)
(72) Inventor: BAEK, Kyung Min, 16923 Yongin-si (KR); KIM, Gun, 12911 Hanam-si (KR); KIM, Seok, 12285 Namyangju-shi (KR); NOH, Jeong Ho, 13643 Namyangju-shi (KR); KANG, Jung Hoon, 16831 Yongin-shi (KR); PARK, Chang Ho, 15825 Gunpo-si (KR)
(74) Representative: V.O.

(56) References cited:
- US-A1- 2012 261 874
- US-B2- 8 684 154
- US-B2- 9 123 191

## Description

### BACKGROUND

### 1. Field of the Invention

The present invention relates to a method of verifying the number of media in a media storage unit, and more specifically, to a method of verifying the number of media in a media storage unit that is capable of rapidly and accurately verifying the number of media stored in a drum of a media storage unit.

### 2. Discussion of Related Art

Automated teller machines are automatic devices that may support basic financial services, such as deposits or withdrawals, in relation to financial services without a bank staff, regardless of location and time. Recently, automated teller machines have been used for various purposes, such as deposit and withdrawal of checks, account bookkeeping, giro payment, and ticket sales as well as deposits and withdrawals of bank notes.

In an automated teller machine, there are cases in which information about the number of media stored in a cassette or drum, which is a media storage unit storing media, such as banknotes or checks, is uncertain. For example, when a failure such as a jam (jam1) of media occurs during withdrawal or deposit, the failure is recovered from, and in this case, information about the number of media recorded in a database at the time of the jam may not match the actual number of media stored in the cassette or drum after the failure recovery.

In addition, failures that may occur in a media storage unit may be caused not only by jams but also by other various causes, such as when media are not withdrawn one by one but are transported while two or more are stuck together, or when information about the number of media recorded in the database changes due to a power failure during a deposit or withdrawal transaction.

When information about the number of media stored in a media storage unit is uncertain in this way, the conventional technology is provided to retrieve all of the media stored in each cassette or drum of the media storage unit out of the cassette or drum, and while moving the media back into each cassette or drum, count the number of media to update the information recorded in the database, to thereby verify the number of media stored in each cassette or drum.

However, according to the conventional method of verifying the number of media in a media storage unit, it takes a long time to verify the number of media, which lowers the operation rate of the device and makes device management inconvenient.

On the other hand, in the case of a cashier deposit device used by a cashier, the cashier deposits media through a customer receptionist unit, and the deposited media are allowed to pass through a discriminating unit that recognizes serial numbers thereof, and then are returned and stored in the cassette, while in the case of a recycling type deposit and withdrawal system (bill recycling machine: BRM) used by a customer, a cash transfer agent opens a safe and mounts a cassette containing media on a cassette receiving unit of the safe, and thus the media are accommodated without the serial numbers being recognized. Therefore, during a settlement operation to verify the number of media stored in practice in a corresponding cassette after failure recovery, such as from a media jam in the BRM, information such as the serial number of the media is not identified, and the media settlement operation is not easy.

As a related art, there is disclosed Korean Laid-open Patent Publication No. 10-2009-0069702.

US 9123191 B2, US 2012/0261874 A1 and US 8684154 B2 disclose methods for verifying the number of media in a media storage unit by feeding a plurality of media from the media storage unit to a recognition unit, reading the serial numbers of the fed media and checking the serial numbers against a database of serial numbers of media which are stored in the media storage unit.

### SUMMARY OF THE INVENTION

The present invention is directed to providing a method of verifying the number of media in a media storage unit that is capable of rapidly and accurately verifying the number of media stored in practice in a cassette or drum of a media storage unit after recovery from a jam failure of media is completed.

The technical objectives of the present invention are not limited to the above, and other objectives may become apparent to those of ordinary skill in the art based on the following descriptions.

According to an aspect of the present invention, there is provided a method of verifying a number of media in a media storage unit, the method including: while retrieving a medium from a media storage unit and moving the medium, recognizing, by a discriminating unit, a serial number of the medium; comparing the serial number of the medium recognized by the discriminating unit with a record of a database in which serial numbers of media stored in the media storage unit are recorded, and searching for whether there is a serial number that matches the recognized serial number of the medium; and when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding media storage unit.

As the first embodiment according to claim 1, the recognizing of the serial number of the medium includes, while retrieving a single medium from a corresponding cassette of the medium storage unit and moving the retrieved single medium to an abnormal bill cassette, recognizing, by the discriminating unit, a serial number of the retrieved single medium; the searching for whether there is a matching serial number may include comparing the recognized serial number of the medium with the record of the database in which serial numbers of media stored in the corresponding cassette are recorded according to an order in which the media are stored, and searching for whether there is a serial number that matches the recognized serial number; and the updating of the record of the database may include, when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding cassette.

The method according to the first embodiment further comprises, when a result of the searching is that the matching serial number is found, transferring the medium in the abnormal bill cassette to be returned to the corresponding cassette; and adding data of the number of the medium returned to the corresponding cassette, to update the record of the database.

The method according to the first embodiment further comprises, when a result of the searching is that the matching serial number is not found, additionally retrieving a single medium from the corresponding cassette of the medium storage unit, allowing the single medium to pass through the discriminating unit for a serial number thereof to be recognized, and then moving the single medium to the abnormal bill cassette; and comparing the serial number of the medium moved to the abnormal bill cassette with the serial numbers of the media stored in the corresponding cassette recorded in the database, and additionally searching for whether there is a serial number that matches the recognized serial number.

The method wherein the additional searching for whether there is a matching serial number is performed until a serial number that matches the serial number of the medium moved to the abnormal bill cassette is found among the serial numbers of the media stored in the corresponding cassette recorded in the database.

The method may further comprising: when a serial number that matches the serial number of the medium moved to the abnormal bill cassette is not found among the serial numbers of the media stored in the corresponding cassette recorded in the database before a number of media retrieved from the corresponding cassette reaches a set number, displaying a media recognition unreliability message for the corresponding cassette on a display unit; and allowing all of the media of the corresponding cassette to pass through the discriminating unit for the serial numbers thereof to be recognized so as to update the record of the database regarding the number of the media stored in the corresponding cassette.

As the second embodiment according to claim 4, the recording of the serial numbers of the media includes, prior to settlement of media stored in a corresponding cassette of the media storage unit, while moving all of the media of the corresponding cassette to another cassette via the discriminating unit, recognizing serial numbers of the media, and then recording the serial numbers in the database; the recognizing of the serial numbers of the media includes, at the time of settlement of the media stored in the corresponding cassette, while retrieving a single medium from the corresponding cassette and moving the retrieved single medium to the other cassette, recognizing, by the discriminating unit, a serial number of the single retrieved medium; the searching for whether there is a matching serial number includes comparing the recognized serial number of the medium with the record of the database in which the serial numbers of the media stored in the corresponding cassette are recorded, and searching for whether there is a serial number that matches the recognized serial number; and the updating of the record of the database includes, when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding cassette.

The method according to the second embodiment further comprises, when a result of the searching is that the matching serial number is found, transferring the medium in the other cassette to be returned to the corresponding cassette; and adding data of the number of the medium returned to the corresponding cassette, to update the record of the database.

The method according to the second embodiment further comprises, when a result of the searching is that the matching serial number is not found, additionally retrieving a single medium from the corresponding cassette of the medium storage unit, allowing the single medium to pass through the discriminating unit for a serial number thereof to be recognized and then moving the single medium to the other cassette; and comparing the serial number of the medium moved to the other cassette with the serial numbers of the media stored in the corresponding cassette recorded in the database, and additionally searching for whether there is a serial number that matches the serial number of the medium moved to the other cassette.

The method wherein the additional searching for whether there is the matching serial number is performed until a serial number that matches the serial number of the medium moved to the other cassette is found among the serial numbers of the media stored in the corresponding cassette recorded in the database.

The method may further comprising, when a serial number that matches the serial number of the medium moved to the other cassette is not found among the serial numbers of the media stored in the corresponding cassette recorded in the database before a number of media retrieved from the corresponding cassette reaches a set number, displaying a media recognition unreliability message for the corresponding cassette on a display unit; and allowing all of the media of the corresponding cassette to pass through the discriminating unit for the serial numbers thereof to be recognized so as to update the record of the database regarding the number of the media stored in the corresponding cassette.

As the third embodiment according to claim 7, the recognizing of the serial number of the medium includes, while retrieving a medium from a drum of the media storage unit and circularly moving the retrieved medium, recognizing, by the discriminating unit, a serial number of the medium; the searching for whether there is a matching serial number includes comparing the recognized serial number of the medium with the record of the database in which serial numbers of media stored in the drum are recorded according to an order in which the media are stored, and searching for whether there is a serial number that matches the recognized serial number; and the updating of the record of the database includes, when a result of the searching is that the matching serial number is found, deleting data of the medium corresponding to the matching serial number and data of an upper medium of the medium recorded on the database, and adding data of the number of the circularly moved medium to data of lower media that remain after the deleting, to update the record of the database regarding the number of the media stored in the drum.

The method according to the third embodiment further comprises, when a result of the searching is that the matching serial number is not found, retrieving media one more than the previously retrieved medium from the drum of the medium storage unit, allowing the retrieved media to pass through the discriminating unit for serial numbers thereof to be recognized, and then circularly moving the media to the drum; and comparing the serial number of the medium circularly moved to the drum with the serial numbers of the media stored in the drum recorded in the database, and additionally searching for whether there is a serial number that matches the serial number of the medium circularly moved to the drum.

The method wherein the additional searching for whether there is a matching serial number is performed until a serial number that matches the serial number of the medium circularly moved to the drum is found among the serial numbers of the media stored in the drum recorded in the database.

The method may further comprising, when a serial number that matches the serial number of the medium circularly moved to the drum is not found among the serial numbers of the media stored in the drum recorded in the database before a number of media retrieved from the drum reaches a set number, displaying a media recognition unreliability message for the drum on a display unit; and allowing all of the media of the drum to pass through the discriminating unit for the serial numbers thereof to be recognized so as to update the record of the database regarding the number of the media stored in the drum.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

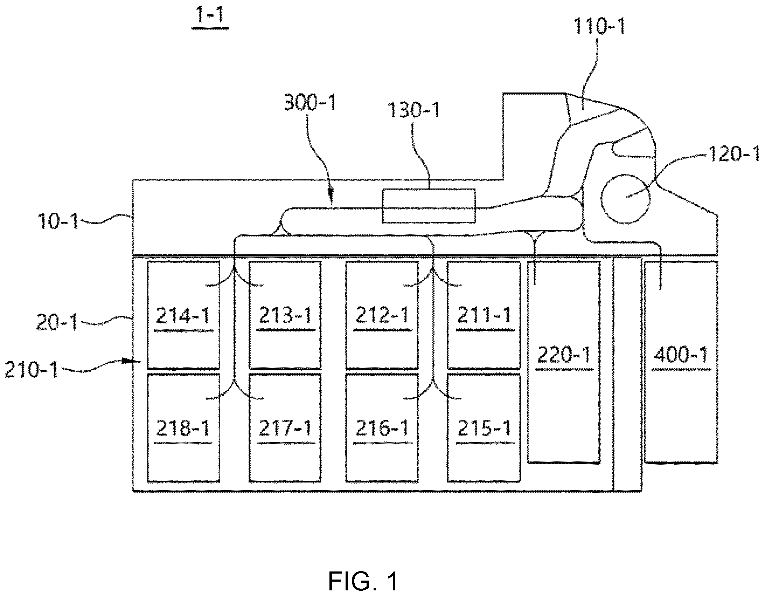

FIG. 1 is a block diagram illustrating an automated teller machine to which the first embodiment of the present invention is applied;

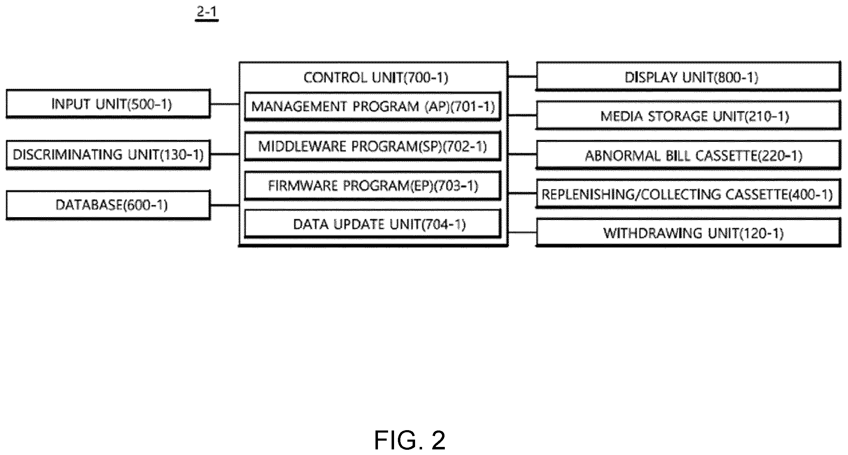

FIG. 2 is a control block diagram illustrating an apparatus for verifying the number of media in a media storage unit according to the first embodiment of the present invention;

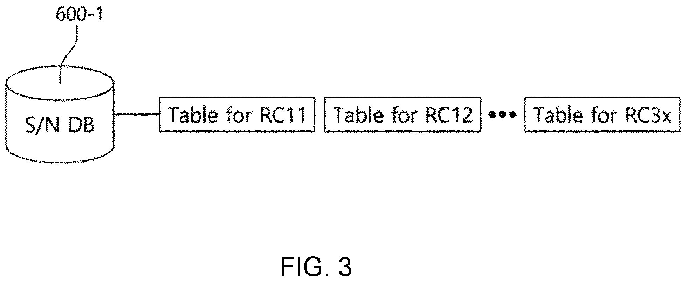

FIG. 3 is a diagram illustrating a database in which media information for each cassette is stored in the apparatus for verifying the number of media in the media storage unit according to the first embodiment of the present invention;

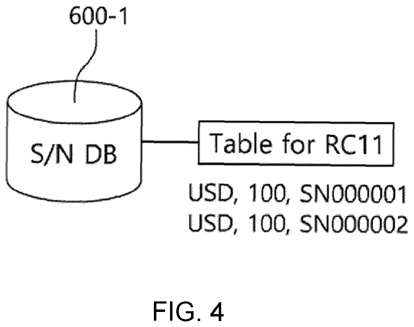

FIG. 4 is a diagram illustrating an example of a database in which information about two media accommodated in a corresponding cassette is stored in the apparatus for verifying the number of media in the media storage unit according to the first embodiment of the present invention;

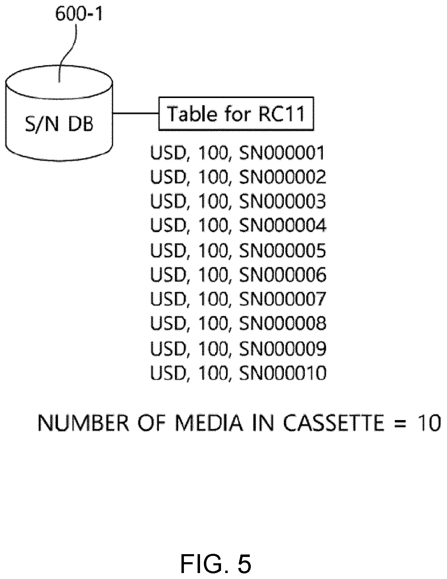

FIG. 5 is a diagram illustrating an example of media information stored in a database when ten media are accommodated in a corresponding cassette at the time of a jam in the apparatus for verifying the number of media of the media storage unit according to the first embodiment of the present invention;

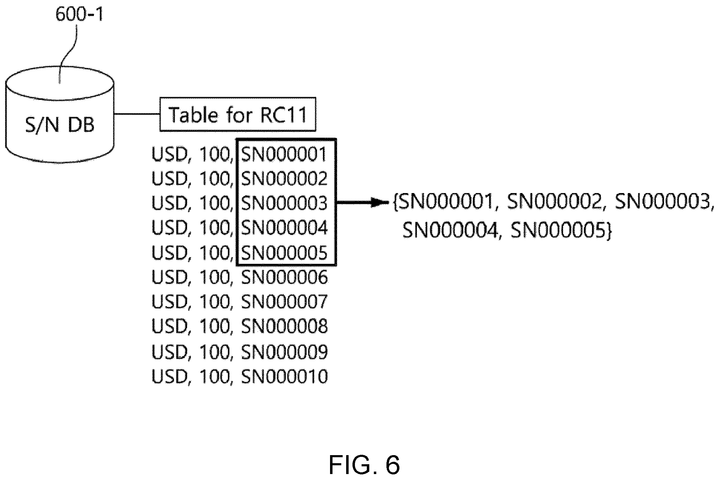

FIG. 6 is a diagram for describing an operation of requesting verification of the number of media together with serial numbers of the media in a range to be searched by a management program of the apparatus for verifying the number of media in the media storage unit according to the first embodiment of the present invention, after completion of recovery from a jam failure;

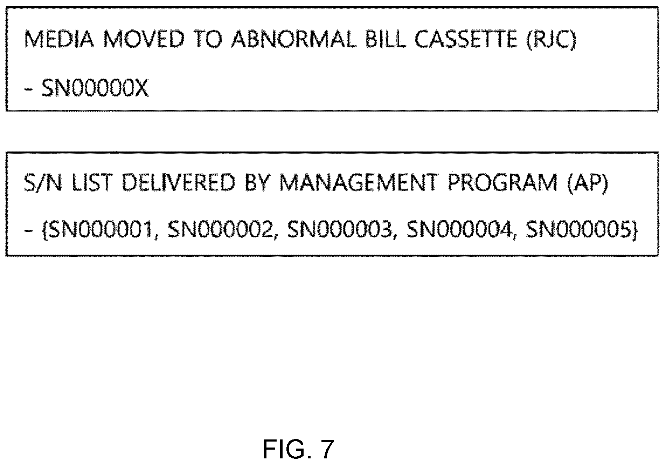

FIG. 7 is a diagram illustrating an example of a case in which, when the media serial number of a single medium retrieved from the corresponding cassette is recognized by a discriminating unit and then the medium is moved to an abnormal bill cassette, there is no serial number that matches the media serial number of the moved medium among serial numbers of media transmitted by the management program, in the apparatus for verifying the number of media in the media storage unit according to the first embodiment of the present invention;

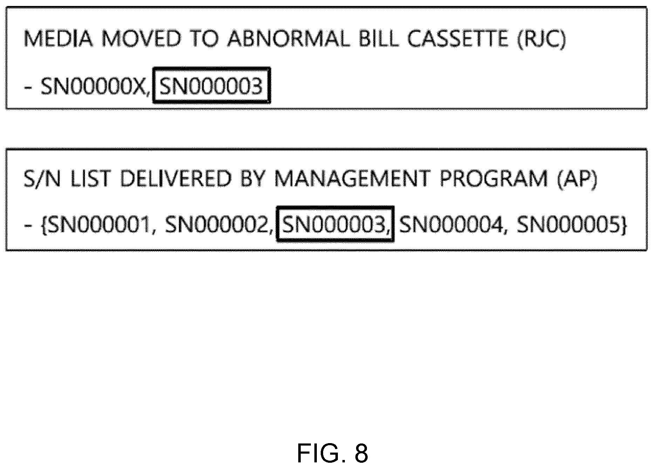

FIG. 8 is a diagram illustrating an example of a case in which, when the media serial number of a single medium additionally retrieved from the corresponding cassette is recognized by the discriminating unit and then the medium is moved to the abnormal bill cassette, there is a serial number that matches the media serial number of the moved medium among serial numbers of media transmitted by the management program in the apparatus for verifying the number of media in the media storage unit according to the first embodiment of the present invention;

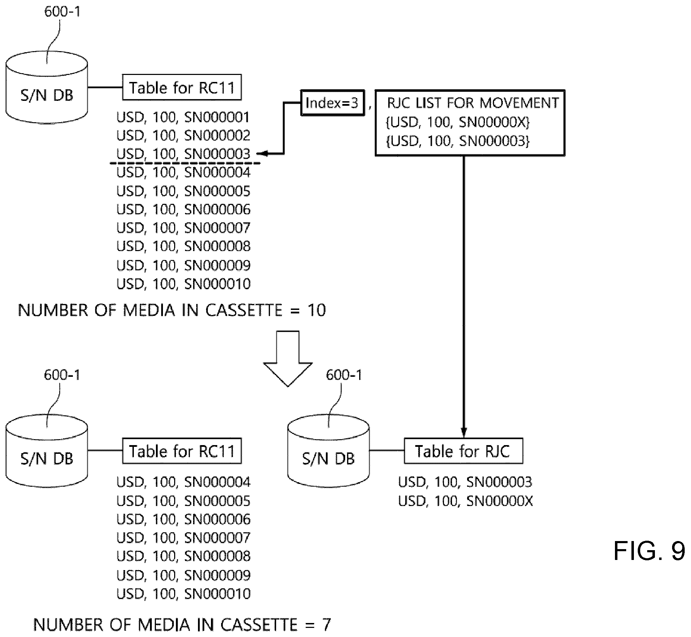

FIG. 9 is a diagram for describing an operation of calculating the number of media in a cassette using data remaining after deleting data preceding a corresponding medium in a database of the apparatus for verifying the number of media in the media storage unit according to the first embodiment of the present invention;

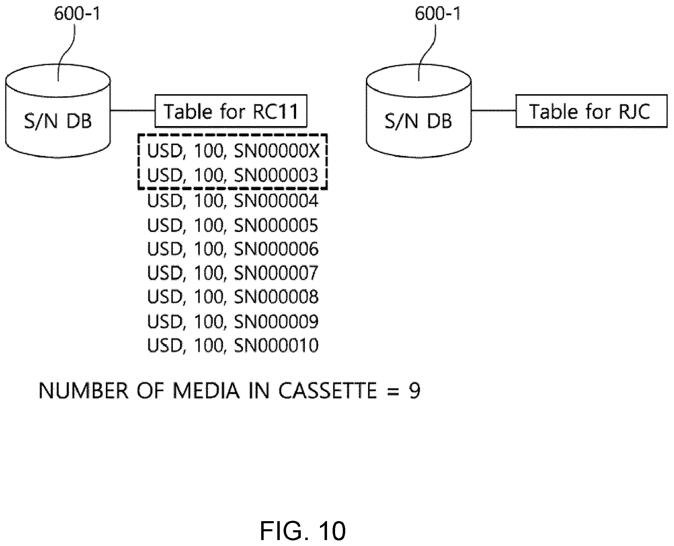

FIG. 10 is a diagram illustrating an operation of transferring media from the abnormal bill cassette to the corresponding cassette and adding the number of the transferred media to update data of the number of media stored in the corresponding cassette, by the apparatus for verifying the number of media in the media storage unit according to the first embodiment of the present invention;

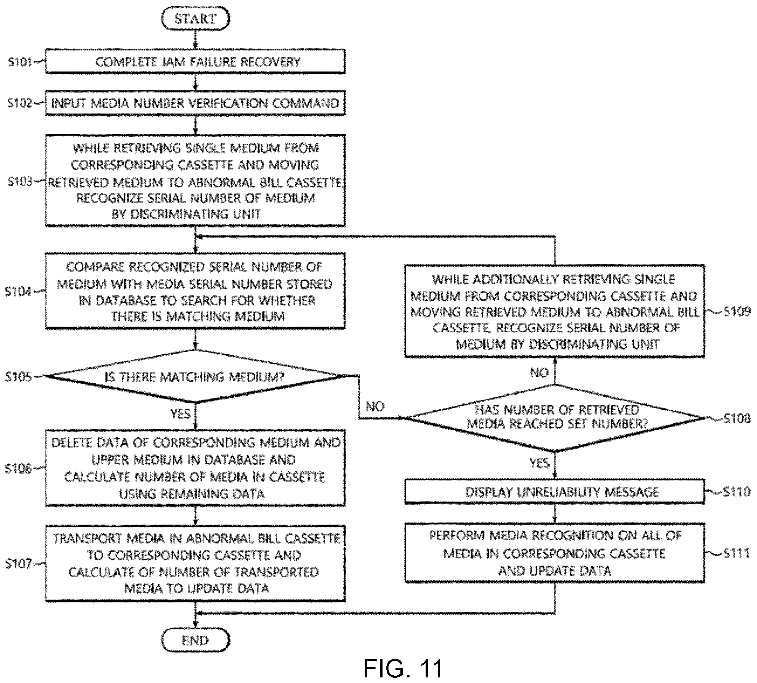

FIG. 11 is a flowchart showing a method of verifying the number of media in a media storage unit according to the first embodiment of the present invention;

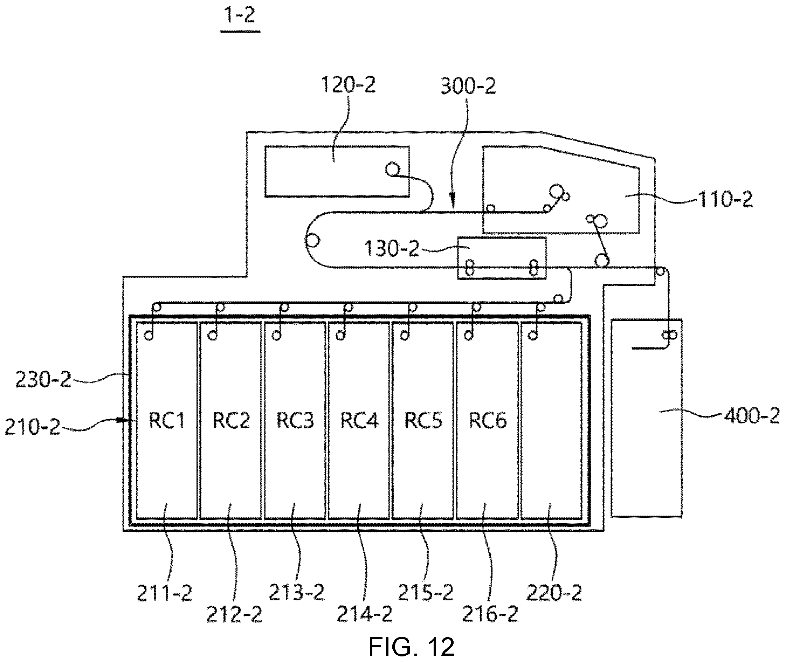

FIG. 12 is a block diagram illustrating an automated teller machine to which the second embodiment of the present invention is applied;

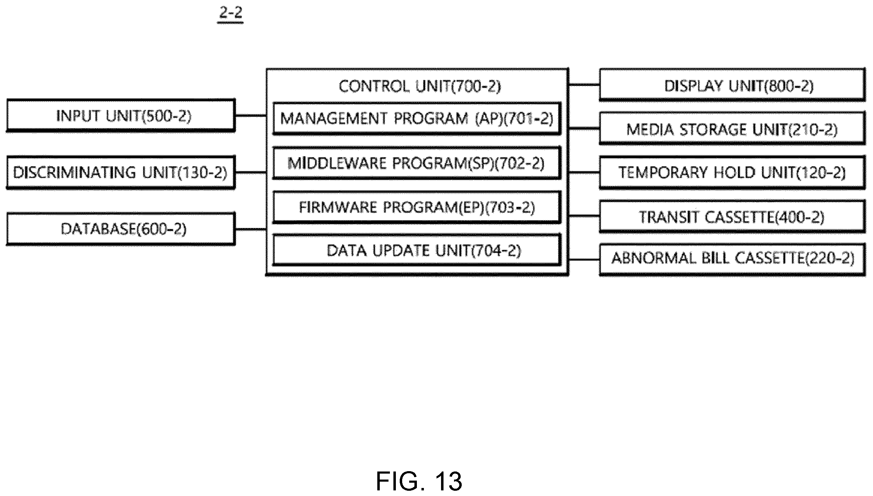

FIG. 13 is a control block diagram illustrating an apparatus for verifying the number of media in the media storage unit according to the second embodiment of the present invention;

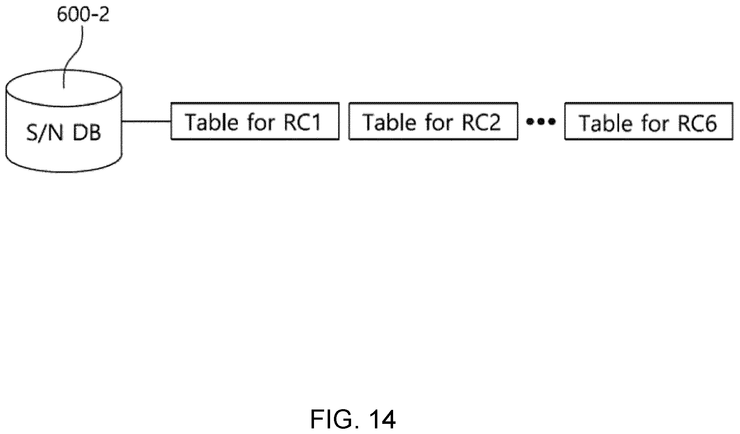

FIG. 14 is a diagram illustrating a database in which media information for each cassette is stored in the apparatus for verifying the number of media in the media storage unit according to the second embodiment of the present invention;

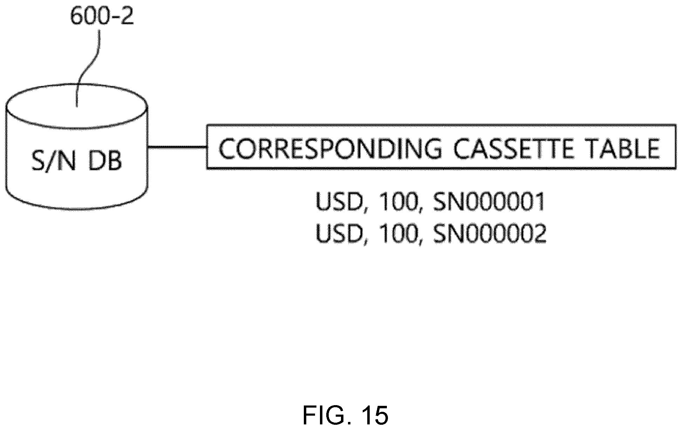

FIG. 15 is a diagram illustrating an example of a database in which information about two media accommodated in a corresponding cassette is stored in the apparatus for verifying the number of media in the media storage unit according to the second embodiment of the present invention;

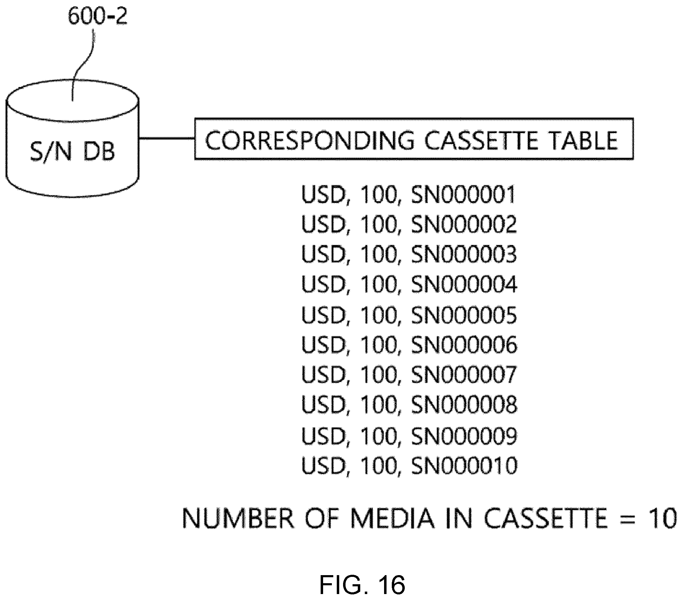

FIG. 16 is a diagram illustrating an example of media information stored in a database when ten media are accommodated in a corresponding cassette at the time of jam in the apparatus for verifying the number of media of the media storage unit according to the second embodiment of the present invention;

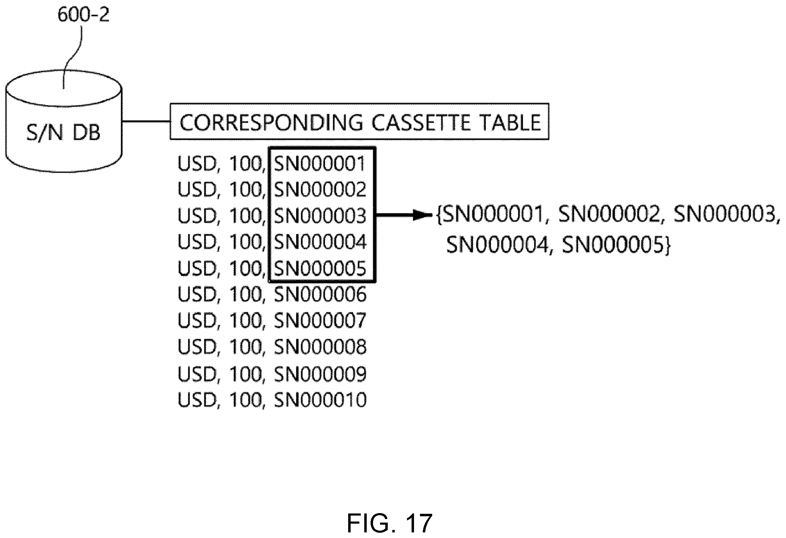

FIG. 17 is a diagram for describing an operation of requesting verification of the number of media together with serial numbers of the media in a range to be searched by a management program of the apparatus for verifying the number of media in the media storage unit according to the second embodiment of the present invention, after completion of recovery from a jam failure;

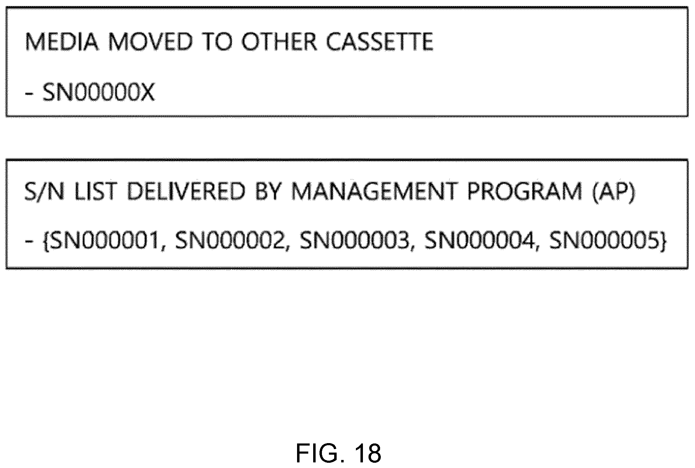

FIG. 18 is a diagram illustrating an example of a case in which, when the media serial number of a single medium retrieved from the corresponding cassette is recognized by a discriminating unit and then the medium is moved to another cassette, there is no serial number that matches the media serial number of the moved medium among serial numbers of media transmitted by the management program in the apparatus for verifying the number of media in the media storage unit according to the second embodiment of the present invention;

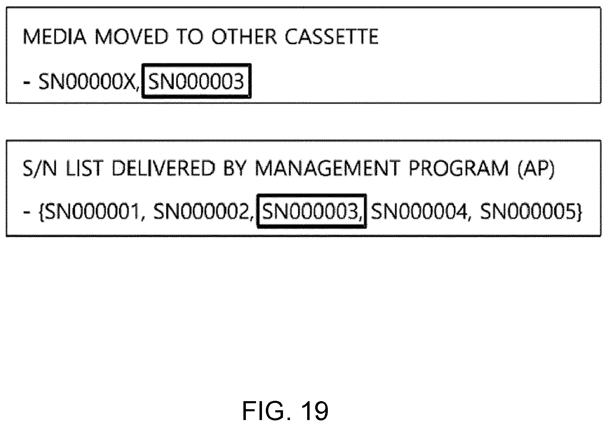

FIG. 19 is a diagram illustrating an example of a case in which, when the media serial number of a single medium additionally retrieved from the corresponding cassette is recognized by the discriminating unit and then the medium is moved to the other cassette, there is a serial number that matches the media serial number of the moved medium among serial numbers of media transmitted by the management program in the apparatus for verifying the number of media in the media storage unit according to the second embodiment of the present invention;

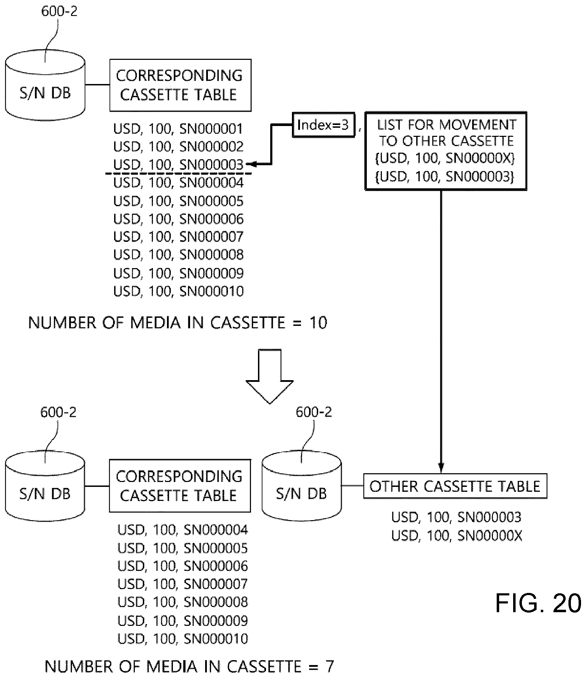

FIG. 20 is a diagram for describing an operation of calculating the number of media in a cassette using data remaining after deleting data preceding a corresponding medium in a database of the apparatus for verifying the number of media in the media storage unit according to the second embodiment of the present invention;

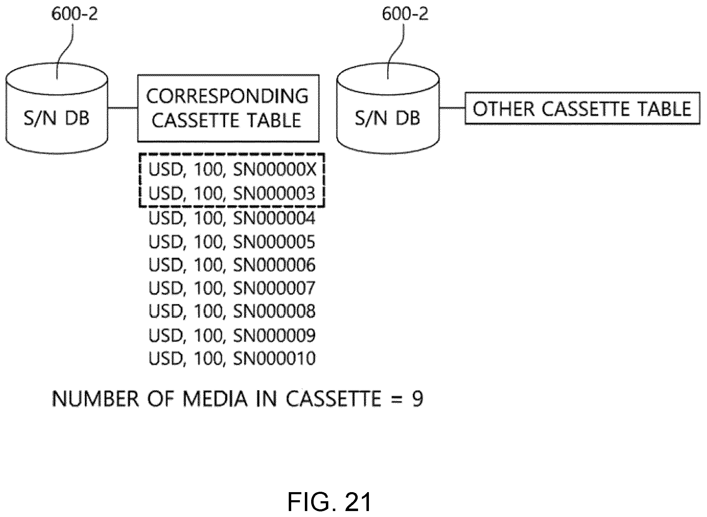

FIG. 21 is a diagram illustrating an operation of transferring media from the other cassette to the corresponding cassette and adding the number of the transferred media to update data of the number of media stored in the corresponding cassette, by the apparatus for verifying the number of media in the media storage unit according to the second embodiment of the present invention;

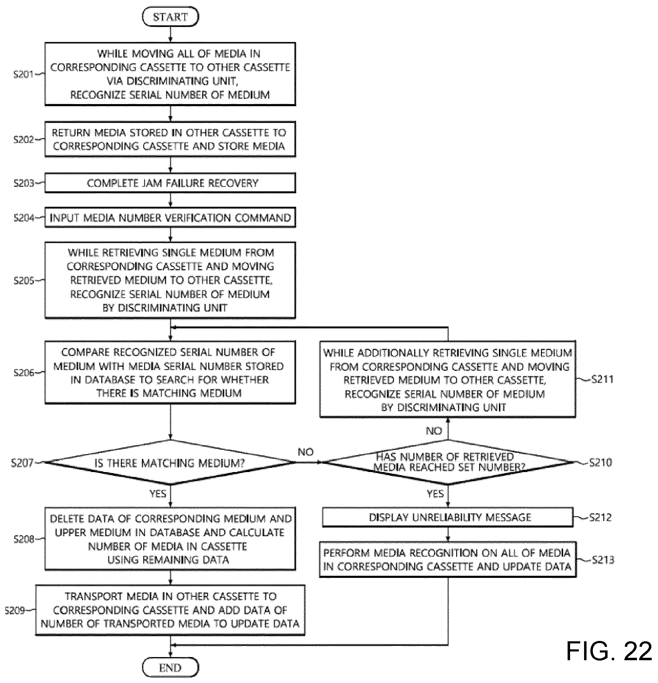

FIG. 22 is a flowchart showing a method of verifying the number of media in a media storage unit according to the second embodiment of the present invention;

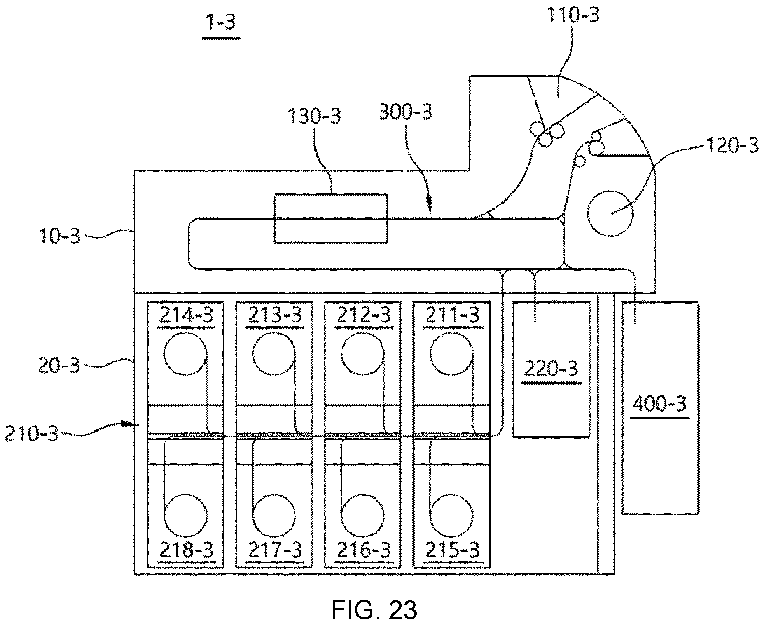

FIG. 23 is a block diagram illustrating an automated teller machine to which the third embodiment of the present invention is applied;

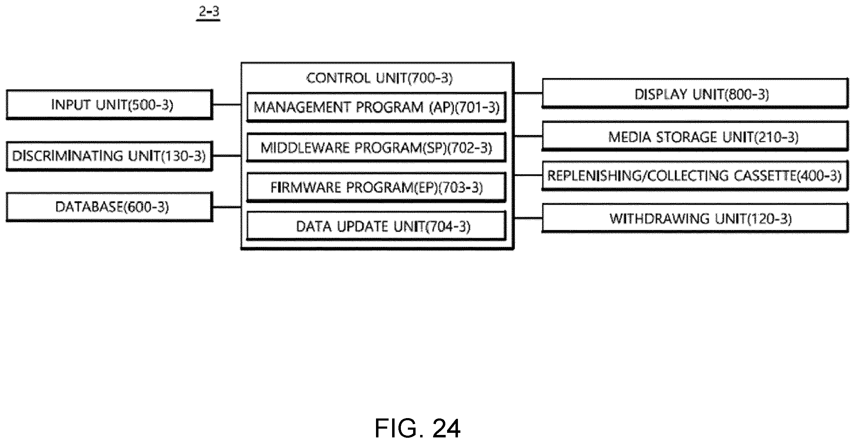

FIG. 24 is a control block diagram illustrating an apparatus for verifying the number of media in a media storage unit according to the third embodiment of the present invention;

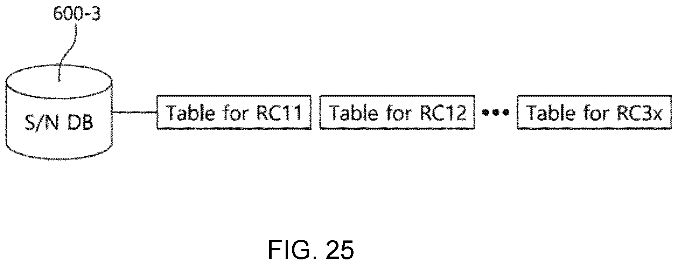

FIG. 25 is a diagram illustrating a database in which media information for each drum is stored in the apparatus for verifying the number of media in the media storage unit according to the third embodiment of the present invention;

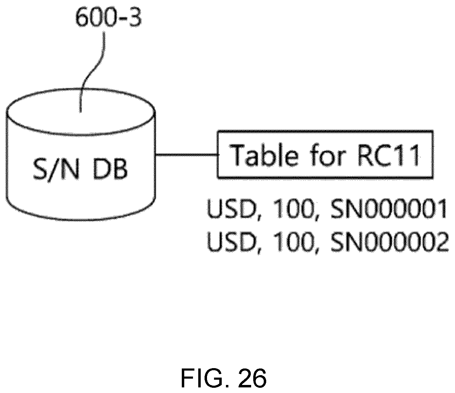

FIG. 26 is a diagram illustrating an example of a database in which information about two media accommodated in a corresponding drum is stored in the apparatus for verifying the number of media in the media storage unit according to the third embodiment of the present invention;

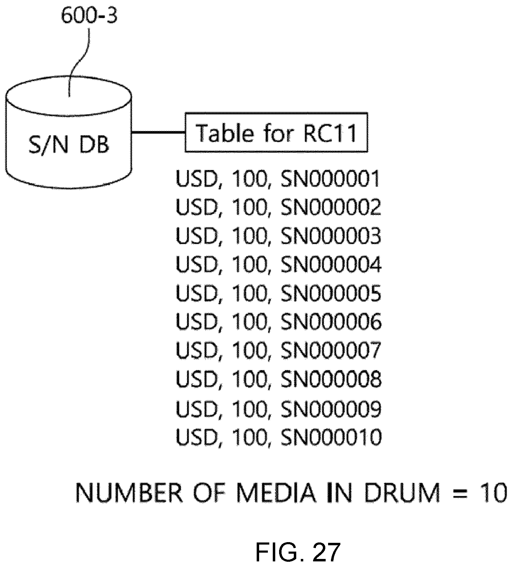

FIG. 27 is a diagram illustrating an example of media information stored in a database when ten media are accommodated in a corresponding drum at the time of a jam in the apparatus for verifying the number of media of the media storage unit according to the third embodiment of the present invention;

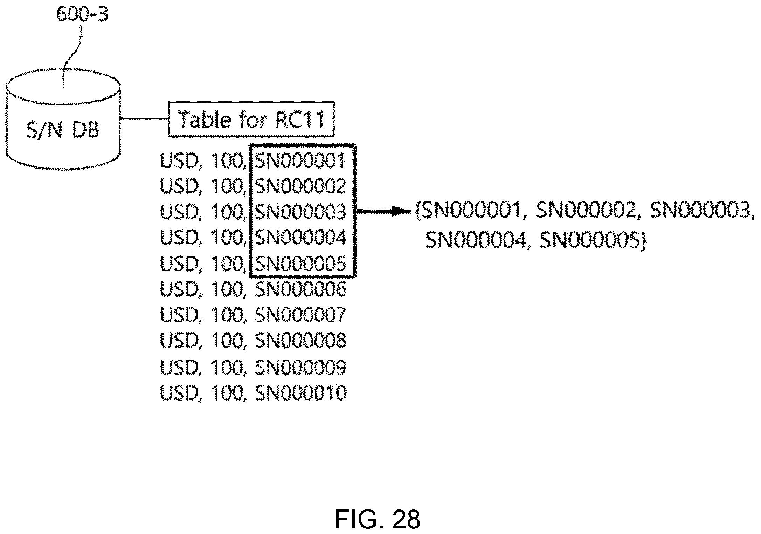

FIG. 28 is a diagram for describing an operation of requesting verification of the number of media together with serial numbers of media in a range to be searched by a management program of the apparatus for verifying the number of media in the media storage unit according to the third embodiment of the present invention, after completion of recovery from a jam failure;

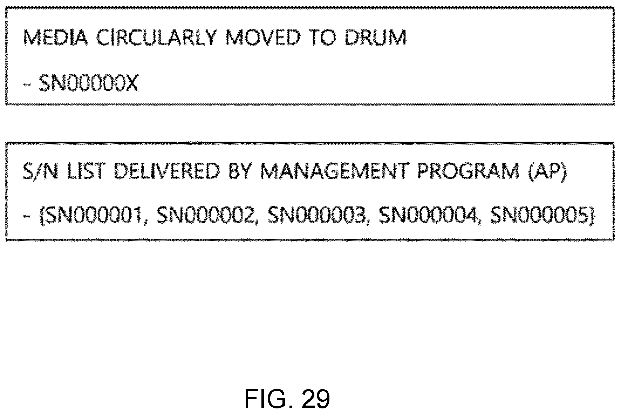

FIG. 29 is a diagram illustrating an example of a case in which, when the media serial number of a single medium moved from the corresponding drum is recognized by an identification unit and then the medium is moved again to the drum, there is no serial number that matches the media serial number of the moved medium among serial numbers of media transmitted by the management program in the apparatus for verifying the number of media in the media storage unit according to the third embodiment of the present invention;

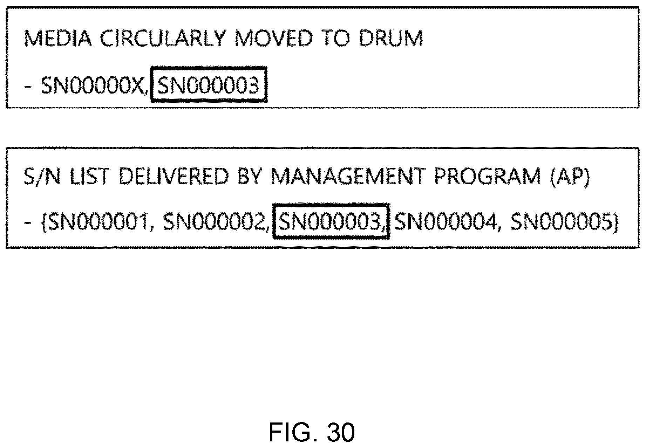

FIG. 30 is a diagram illustrating an example of a case in which, when the media serial numbers of two media moved from the corresponding drum are recognized by the discriminating unit and then the media are moved back to the drum, there is a serial number that matches the media serial number of the moved medium among serial numbers of media transmitted by the management program in the apparatus for verifying the number of media in the media storage unit according to the third embodiment of the present invention;

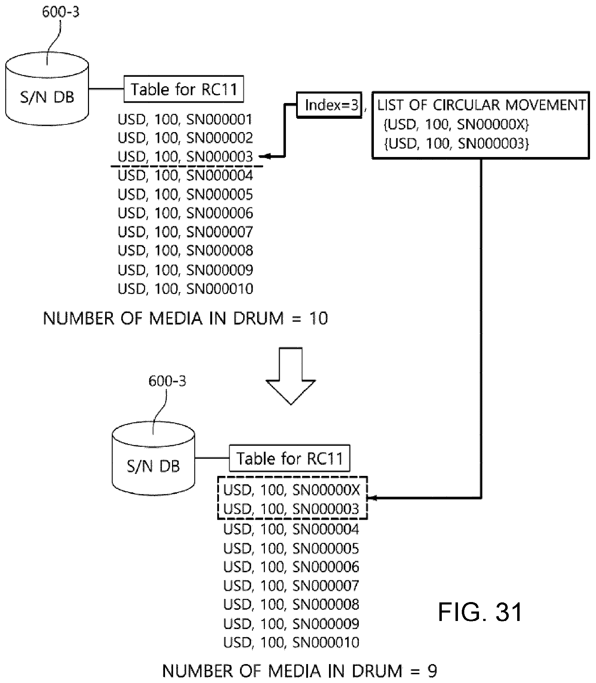

FIG. 31 is a diagram for describing an operation of updating data of the number of media stored in the corresponding drum by adding the number of the circularly moved media to data remaining after deleting data of media preceding a corresponding medium, in a database of the apparatus for verifying the number of media in the media storage unit according to the third embodiment of the present invention; and

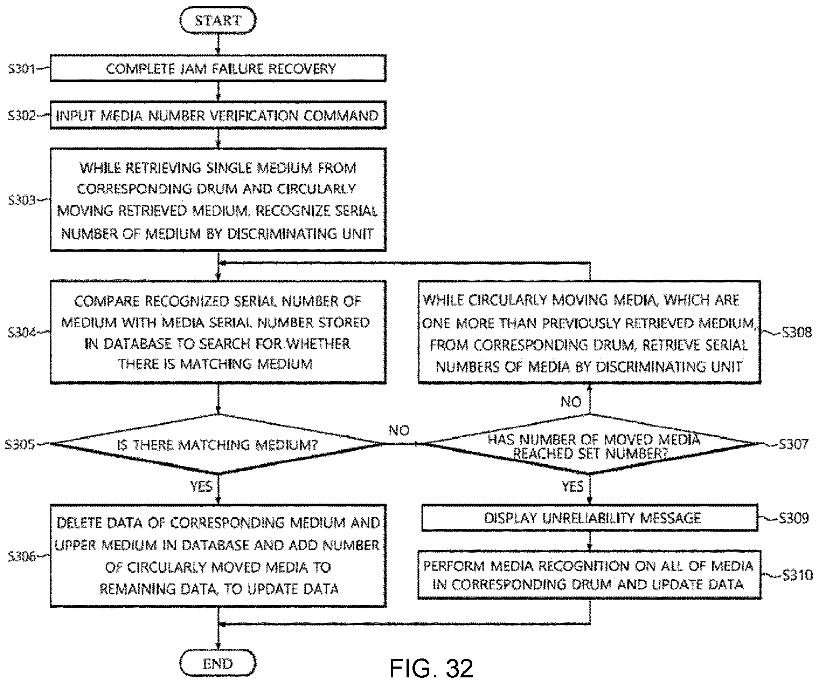

FIG. 32 is a flowchart showing a method of verifying the number of media in a media storage unit according to the third embodiment of the present invention.

### DETAILED DESCRIPTION OF EXEMPLARY EMBODIMENTS

Hereinafter, a configurations and operation of exemplary embodiments of the present invention will be described in detail with reference to the accompanying drawings.

### First embodiment

First, referring to FIG. 1, a configuration of an automated teller machine 1-1 to which the first embodiment of the present invention is applied will be described. The automated teller machine 1-1 to which the present invention is applied may include an upper module 10-1 and a lower module 20-1 provided thereunder.

The upper module 10-1 is provided with a depositing unit 110-1, a withdrawing unit 120-1, and a discriminating unit 130-1, the lower module 20-1 is provided with a media storage unit 210-1 in which media are stored and an abnormal bill cassette 220-1, and a replenishing/collecting cassette 400-1 is provided on an outer side of the lower module 20-1. In addition, the automated teller machine 1-1 may include a transporting path 300-1 for transporting banknotes according to various transaction patterns, such as deposit, withdrawal, replenishment, and collection of media in the automated teller machine 1-1, and a plurality of gates for switching the transporting direction of the banknote to a set direction.

The depositing unit 110-1 provides a space into which deposited media are inserted.

The withdrawal unit 120-1 provides a space to which media discriminated as abnormal bills by the discriminating unit 130-1 in deposit or replenishment of media or media discriminated as normal bills by the discriminating unit 130-1 in withdrawal of media are withdrawn. In the present embodiment, the withdrawal unit 120-1 may provide a space in which media retrieved from the medium storage unit 210-1 are loaded when media number verification of the medium storage unit 210-1 is impossible.

The discriminating unit 130-1 is provided to discriminate the presence or absence of abnormalities and the type of a medium transported along the transporting path 300-1 by detecting the medium passing along the transporting path 300-1 while scanning an image of the medium, to detect the authenticity, type, and damage of the transported medium.

In the present embodiment, the discriminating unit 130-1 serves to recognize the serial number printed on the medium, and transmit information about the recognized serial number of the medium to a control unit 700-1.

The media storage unit 210-1 may include upper cassettes 211-1, 212-1, 213-1, and 214-1 and lower cassettes 215-1, 216-1, 217-1, and 218-1 that are stacked one on top of another, and provided as the plurality of upper cassettes 211-1, 212-1, 213-1, and 214-1 and the plurality of lower cassette 215-1, 216-1, 217-1, and 218-1 at positions spaced a predetermined distance from each other in the front-rear direction.

The abnormal bill cassette 220-1 may store a medium discriminated as an abnormal bill by the discriminating unit 130-1 in withdrawal or replenishment of media. In the present embodiment, the abnormal bill cassette 220-1 provides a space in which a medium retrieved from a verification target cassette (hereinafter referred to as a corresponding cassette 1) is temporarily stored during media number verification of the media storage unit 210-1.

The replenishing/collecting cassette 400-1 may be selectively detached when replenishment of media to the medium storage unit 210-1 or collection of media from the medium storage unit 210-1 is performed.

In the present embodiment, the replenishing/collecting cassette 400-1 provides a space in which a medium retrieved from the media storage unit 210-1 is loaded when media number verification of the medium storage unit 210-1 is not possible.

Referring to FIGS. 1 and 2, an apparatus 2-1 for verifying the number of media of the media storage unit 210-1 according to the first embodiment of the present invention includes an input unit 500-1 for inputting a media number verification command of the media storage unit 210-1, a discriminating unit 130-1 for recognizing serial numbers printed on media, a database 600-1 in which serial numbers of media stored in each cassette of the media storage unit 210-1 are recorded according to the order in which the media are stored, a control unit 700-1 for controlling the operation of components for verifying the number of media, a display unit 800-1 for displaying information and a status of the number of media for each cassette, and the media storage unit 210-1, the abnormal bill cassette 220-1, the replenishing/collecting cassette 400-1, and the withdrawal unit 120-1.

The control unit 700-1 may include a management program (AP) 701-1, a middleware program (SP) 702-1, a firmware program (EP) 703-1, and a data update unit 704-1.

When a manager inputs a command to verify the number of media stored in a corresponding cassette of the media storage unit 210-1 through the input unit 500-1, the management program (AP) 701-1 transmits a command signal to the middleware program (SP) 702-1 together with media serial number information in a range to be searched among media serial number information stored in the database 600-1.

The middleware program (SP) 702-1 serves to interconnect the management program (AP) 701-1 and the firmware program (EP) 703-1 and relay transmission and reception of a command signal and serial number information about media recognized by the discriminating unit 130-1.

The firmware program (EP) 703-1 is configured to, with respect to a medium that is retrieved from a corresponding cassette and passes through the discriminating unit 130-1, during which the serial number thereof is recognized, and then moves to the abnormal bill cassette 220-1, receive serial number information of the medium and search for whether there is a serial number that matches the serial number of the medium moved to the abnormal bill cassette 220-1 in a list of serial numbers of media transmitted by the management program (AP) 701-1.

The data update unit 704-1 is configured to, when a result of the searching is that there is a serial number that matches the serial number of the medium moved to the abnormal bill cassette 220-1 in the list of the serial numbers of the media transmitted by the management program (AP) 701-1, delete data of the medium corresponding to the matching serial number and data of an upper medium of the medium recorded in the database 600-1, and based on data of lower media that remain after the deleting, update a record of the database 600-1 regarding the number of media stored in the corresponding cassette.

In addition, the control unit 700-1 transfers the medium of the abnormal bill cassette 220-1 to be returned to the corresponding cassette and adds data regarding the number of media returned to the corresponding cassette so as to update the record of the database 600-1.

Referring to FIG. 3, information about serial numbers of media is stored in the database 600-1 according to the order in which the media are stored in each cassette. In one embodiment, the serial number of a medium may be composed of a combination of letters and Arabic numerals.

For example, referring to FIG. 4, when two $100 media are stored in a cassette 211, RC11, serial numbers SN000001 and SN000002 of the media are recorded in the database 600-1. In this case, it can be seen that the medium corresponding to the serial number SN000002 at a lower position is stored in the cassette 211, RC11 before the medium corresponding to the serial number SN000001 at a higher position.

FIG. 5 illustrates media information stored in the database 600-1 when ten media are stored in a corresponding cassette when a jam occurs, in which serial numbers SN000001 to SN000010 may be recorded in the database 600-1 according to the order in which the ten media are stored.

In the present embodiment, when there is a request to verify the number of media in the media storage unit 210-1, a single medium located on the top in the corresponding cassette of the medium storage unit 210-1 is retrieved, the serial number of the retrieved medium is recognized while it passes through the discriminating unit 130-1, and then the medium is moved to and stored in the abnormal bill cassette 220-1.

FIG. 6 illustrates a process in which, when a media number verification command of media stored in a corresponding cassette of the media storage unit 210-1 is input through the input unit 500-1, the management program (AP) 701-1 extracts a searching range of serial number information SN000001 to SN000005 to be searched among the serial number information of media stored in the database 600-1.

FIG. 7 illustrates a process in which, when a single medium located on the top in the corresponding cassette of the media storage unit 210-1 is retrieved and moved to an abnormal bill cassette 220, RJC, the firmware program 703-1 compares a serial number SN00000X of the medium recognized by the discriminating unit 130-1 with the serial numbers SN000001 to SN000005 of the media stored in the database 600-1. In this case, a case in which there is no serial number that matches the serial number SN00000X of the corresponding medium among the serial numbers SN000001 to SN000005 of the media stored in the database 600-1 is illustrated.

In this case, as shown in FIG. 8, an additional single medium is retrieved from the corresponding cassette and moved to the abnormal bill cassette 220-1, during which the discriminating unit 130-1 recognizes the serial number of the medium. In this case, the firmware program 703-1 compares the serial numbers SN00000X and SN000003 of the media moved to the abnormal bill cassette 220, RJC with the serial numbers SN000001 to SN000005 of the media stored in the database 600-1. In this case, a case in which a serial number matching the serial number SN000003 of the medium moved on the second is found among the serial numbers SN000001 to SN000005 stored in the database 600-1 is illustrated.

The control unit 700-1 may perform control such that an additional single medium is retrieved from the corresponding cassette of the media storage unit 210-1, the medium is passed through the discriminating unit 130-1 such that the serial number of the medium is recognized, and then the medium is moved to the abnormal bill cassette 220-1 until a serial number that matches the serial number of the medium moved to the abnormal bill cassette 220-1 is found among the serial numbers of the media stored in the corresponding cassette recorded in the database 600-1.

Whether there is a serial number that matches the serial number of the medium moved to the abnormal bill cassette 220-1 among the serial numbers of the media stored in the corresponding cassette recorded in the database 600-1 is searched until the number of media retrieved from the corresponding cassette reaches a set number. In one embodiment, the set number may ten.

In this case, when a serial number that matches the serial number of the medium moved to the abnormal bill cassette 220-1 is not found among the serial numbers of the media stored in the corresponding cassette recorded in the database 600-1, the control unit 700-1 may perform control such that an additional single medium is retrieved from the corresponding cassette of the media storage unit 210-1, the medium is passed through the discriminating unit 130-1 such that the serial number of the medium is recognized, and then the medium is moved to the abnormal bill cassette 220-1, and may perform control such that the serial number of the medium moved to the abnormal bill cassette 220-1 is compared with the serial numbers of the media stored in the corresponding cassette recorded in the database 600-1 to additionally search for whether there is a matching serial number.

Referring to FIG. 9, when a result of the searching is that there is a serial number that matches the serial number SN000003 of the medium moved to the abnormal bill cassette 220-1 in the list of serial numbers SN000001 to SN000005 of media delivered by the management program (AP) 701-1, data SN000001, SN000002, and SN000003 regarding the medium corresponding to the matching serial number SN000003 and the upper medium recorded in the database 600-1 are deleted, and based on the remaining lower media data SN000004 to SN000010, the record of the database 600-1 is updated for the number of media currently stored in the corresponding cassette (seven).

Then, as shown in FIG. 10, the control unit 700-1 transfers the two media in the abnormal bill cassette 220-1 to be returned to the corresponding cassette, and adds data of the number (two) of the media returned to the corresponding cassette, to update the record of the database 600-1 with serial number information for the total of nine media.

On the other hand, when a serial number that matches the serial number of the medium moved to the abnormal bill cassette 220-1 is not found among the serial numbers of the media stored in the corresponding cassette recorded in the database 600-1 before the number of media retrieved from the corresponding cassette reaches the set number (ten), the control unit 700-1 may display a media recognition unreliability message for the corresponding cassette on the display unit 800-1 and allow all of the media in the corresponding cassette to pass through the discriminating unit 130-1 for the serial numbers thereof to be recognized so as to update the record of the database 600-1 regarding the number of media stored in the corresponding cassette.

In this case, all of the media retrieved from the corresponding cassette may be moved to and stored in the replenishing/collecting cassette 400-1, or may be moved to and stored in the withdrawal unit 120-1, after which all of the media retrieved from the corresponding cassette are allowed to sequentially pass through the discriminating unit 130-1 again, in which the serial numbers of the media are recognized, and then return to the corresponding cassette, and thus the number of the media in the corresponding cassette may be recognized.

Hereinafter, a method of verifying the number of media in the media storage unit according to the first embodiment of the present invention will be described with reference to FIG. 11.

First, jam failure recovery of the media storage unit 210-1 is completed (S101), and then a media number verification command of the media storage unit 210-1 is input (S102).

When the media number verification command is input, a single medium is retrieved from a corresponding cassette in the media storage unit 210-1 and moved to the abnormal bill cassette 220-1, during which the serial number of the medium is recognized by the discriminating unit 130-1 (S103).

Then, the recognized serial number of the medium is compared with a record of the database 600-1 in which serial numbers of media stored in the corresponding cassette are recorded according to the order in which the media are stored, to search for whether there is a serial number that matches the recognized serial number of the medium in the record (S104).

When a result of the searching in operation S104 is that the matching serial number is found, data of the medium corresponding to the matching serial number and data of an upper medium of the medium recorded in the database 600-1 are deleted, and based on data of lower media remaining after the deleting, the record of the database 600-1 regarding the number of media stored in the corresponding cassette is updated (S105 and S106).

In addition, based on the matching serial number being found, the media in the abnormal bill cassette 220-1 are transferred to be returned to the corresponding cassette, and data of the number of the media returned to the corresponding cassette is added to update the record of the database 600-1 again (S107).

When a result of the searching in operation S104 is that the matching serial number is not found, it is determined whether the number of the media retrieved from the corresponding cassette has reached a set number (S108), and when it is determined that the number of the media retrieved from the corresponding cassette has not reached the set number, an additional single medium is retrieved from the corresponding cassette in the media storage unit 210-1 and allowed to pass through the discriminating unit 130-1 for the serial number of the medium to be recognized, and then is moved to the abnormal bill cassette 220-1 (S109), and the process returns to operation S104 of comparing the serial number of the medium moved to the abnormal bill cassette 220-1 with the serial numbers of the media stored in the corresponding cassette recorded in the database 600-1 to additionally search for whether there is a matching serial number.

The operation of additionally searching for whether there is a matching serial number is performed until a serial number that matches the serial number of the medium moved to the abnormal bill cassette 220-1 is found among the serial numbers of the media stored in the corresponding cassette recorded in the database 600-1.

When a serial number that matches the serial number of the medium moved to the abnormal bill cassette 220-1 is not found among the serial numbers of the media stored in the corresponding cassette recorded in the database 600-1 before the number of media retrieved from the corresponding cassette reaches the set number, a media recognition unreliability message for the corresponding cassette is displayed on the display unit 800-1 (S110) and all of the media in the corresponding cassette are allowed to pass through the discriminating unit 130-1 for the serial numbers thereof to be recognized so as to update the record of the database 600-1 regarding the number of the media stored in the corresponding cassette (S111).

### Second embodiment

Referring to FIG. 12, a configuration of an automated teller machine 1-2 to which the second embodiment of the present invention is applied will be described. The embodiment may be applied to the automated teller machine 1-2 equipped with a bill recycling machine (BRM) used by a general customer.

In the automated teller machine 1-2, a customer reception unit 110-2, a temporary hold unit 120-2, and a discriminating unit 130-2 may be provided on an upper side, a media storage unit 210-2 and an abnormal bill cassette 220-2 may be provided on a lower side, and a transit cassette 400-2 may be detachably provided on an outer side of the automated financial machine 1-2.

In addition, the automated teller machine 1-2 may include a transporting path 300-2 for transporting banknotes according to various transaction patterns, such as deposit, withdrawal, replenishment, and collection of media in the automated teller machine 1-2, and a plurality of gates for switching the transporting direction of the banknotes to a set direction.

The customer reception unit 110-2 provides a space into which deposited media are inserted, and provides a space from which a medium discriminated as an abnormal bill by the discriminating unit 130-1 in deposit or replenishment of media or a medium discriminated as a normal bill by the discriminating unit 130-1 in withdrawal of media is withdrawn.

The temporary hold unit 120-2 provides a space in which a medium discriminated as a normal bill in deposit of media or a medium discriminated as an abnormal bill in withdrawal of media or replenishment/collection of media is temporarily stored. In the present embodiment, the temporary hold unit 120-2 is provided to have a storage space with a capacity larger than a storage capacity of one of a plurality of cassettes 211-2, 212-2, 213-2, 214-2, 215-2, and 216-2 provided in the media storage unit 210-2.

The discriminating unit 130-2 is provided to discriminate the presence or absence of abnormalities and the type of a medium transported along the transporting path 300-2, by detecting the medium passing along the transporting path 300-2 while scanning an image of the medium, to detect the authenticity, type, and damage of the transported medium.

In the present embodiment, the discriminating unit 130-2 serves to recognize the serial number printed on the medium, and transmit information about the recognized serial number of the medium to a control unit 700-2.

The media storage unit 210-2 includes a plurality of recycle cassettes 211-2, 212-2, 213-2, 214-2, 215-2, and 216-2 for storing media to be deposited and withdrawn.

The abnormal bill cassette 220-2 may store a medium discriminated as an abnormal bill by the discriminating unit 130-2 in withdrawal or replenishment of media.

The plurality of cassettes 211-2, 212-2, 213-2, 214-2, 215-2, and 216-2 and the abnormal bill cassette 220-2 constituting the media storage unit 210-2 may be provided inside a safe 230-2.

The transit cassette 400-2 may be selectively detached during replenishment of media to the medium storage unit 210-2 or collection of media from the medium storage unit 210-2.

When the number of media stored in one of the plurality of cassettes 211-2, 212-2, 213-2, 214-2, 215-2, and 216-2 is verified (settled), media retrieved from the verification target cassette (hereinafter referred to as a corresponding cassette) are temporarily stored in another cassette.

In an embodiment, the other cassette may be one of the temporary hold unit 120-2 provided outside the safe 230-2 and in which media are temporarily stored during deposit and withdrawal, the transit cassette 400-2 provided outside the safe 230-2 and configured to replenish media to the cassette or collect media from the cassette, and the abnormal bill cassette 220-2 provided inside the safe 230-2 and in which abnormal bill media are stored during deposit and withdrawal.

The temporary hold unit 120-2, the transit cassette 400-2, and the abnormal bill cassette 220-2, which may be used as the other cassette, are provided to have a storage space with a capacity larger than the media storage capacity of the corresponding cassette.

Referring to FIGS. 12 and 13, an apparatus 2-2 for verifying the number of media of the media storage unit 210-2 according to the second embodiment of the present invention includes: an input unit 500-2 for inputting a command to verify the number of media of the media storage unit 210-2; a discriminating unit 130-2 for recognizing serial numbers printed on media; a database 600-2 that, prior to settlement of media stored in the corresponding cassette of the media storage unit 210, for all of the media retrieved from the corresponding cassette and allowed to pass through the discriminating unit 130-2 such that the serial numbers thereof are recognized, records the serial numbers of the media of the corresponding cassette; a control unit 700-2 for controlling the operation of components for verifying the number of media; a display unit 800-2 for displaying information and a status of the number of media for each cassette; and the media storage unit 210-2, the temporary hold unit 120-2, the transit cassette 400-2, and the abnormal bill cassette 220-2.

When the cassettes 211-2, 212-2, 213-2, 214-2, 215-2, and 216-2 of the media storage unit 210-2 are accommodated in a cassette receiving unit inside the safe 230-2 by a cash transfer agent, an operation of recognizing the serial numbers of media accommodated in the cassettes 211-2, 212-2, 213-2, 214-2, 215-2, and 216-2 is performed.

In this case, all of the media stored in the corresponding cassette are allowed to pass through the discriminating unit 130-2, during which the serial numbers are recognized, and then the serial numbers are recorded in the database 600-2 provided to record the serial numbers of the media of the corresponding cassette. When the identification of the media serial numbers of the corresponding cassette is completed, the media stored in the other cassette are returned to the corresponding cassette and stored in the corresponding cassette.

In the case of a recycling type deposit and withdrawal system (bill recycling machine: BRM) used by a general customer, the cash transfer agent opens the safe 230-2 and mounts the cassettes 211-2, 212-2, 213-2, 214-2, 215-2, and 216-2 containing media on the cassette receiving unit of the safe 230-2, and thus the media are accommodated without the serial numbers thereof being recognized. Therefore, prior to settlement of the media stored in the corresponding cassette, the media stored in the corresponding cassette are allowed to move to the other cassette via the discriminating unit 130-2, during which the serial numbers of the media are recognized, and then the serial numbers are recorded in the database 600-2.

When recovery from a jam failure of media is performed and then a command to verify the number of media stored in a corresponding cassette of the media storage unit 210-2 is input through the input unit 500-2, a media settlement operation is performed on the corresponding cassette.

The control unit 700-2 may include a management program (AP) 701-2, a middleware program (SP) 702-2, a firmware program (EP) 703-3, and a data update unit 704-2

The management program (AP) 701-2 transmits a command signal to the middleware program (SP) 702-2 together with media serial number information in a range to be searched among media serial number information stored in the database 600-2.

The middleware program (SP) 702-2 serves to interconnect the management program (AP) 701-2 and the firmware program (EP) 703-2 and relay transmission and reception of a command signal and serial number information about media recognized by the discriminating unit 130-2.

The firmware program (EP) 703-2 is configured to, with respect to a medium that is retrieved from a corresponding cassette and passes through the discriminating unit 130-2, during which the serial number thereof is recognized, and then moves to the other cassette, receive serial number information of the medium and search for whether there is a serial number that matches the serial number of the medium moved to the other cassette in a list of serial numbers of media transmitted by the management program (AP) 701-2.

The data update unit 704-2 is configured to, when a result of the searching is that there is a serial number that matches the serial number of the medium moved to other cassette in the list of serial numbers of the media transmitted by the management program (AP) 701-2, delete data of the medium corresponding to the matching serial number and data of an upper medium of the medium recorded on the database 600-2, and update a record of the database 600-2, regarding the number of media stored in the corresponding cassette based on data of lower media that remains after the deleting.

In addition, the control unit 700-2 transfers the medium of the other cassette to be returned to the corresponding cassette, and adds data regarding the number of the medium returned to the corresponding cassette, to update the record of the database 600-2.

Referring to FIG. 14, information about serial numbers of media for each cassette is stored in the database 600-2. In one embodiment, the serial number of a medium may composed of a combination of letters and Arabic numerals.

For example, referring to FIG. 15, when two $100 media are stored in a corresponding cassette, serial numbers SN000001 and SN000002 of the media are recorded in the database 600-2. In this case, it can be seen that the medium corresponding to the serial number SN000002 at a lower position is stored in the corresponding cassette before the medium corresponding to the serial number SN000001 at a higher position.

FIG. 16 illustrates media information stored in the database 600-2 when ten media are stored in a corresponding cassette when a jam occurs, in which serial numbers SN000001 to SN000010 may be recorded in the database 600-2 according to the order in which the ten media are stored.

In the present embodiment, when there is a request to verify (settle) the number of media in the media storage unit 210-2, a single medium located on the top in the corresponding cassette of the medium storage unit 210-2 is retrieved, the serial number of the retrieved medium is recognized while it passes through the discriminating unit 130-1, and then the medium is moved to and stored in the other cassette.

FIG. 17 illustrates a process in which, when a media number verification command of media stored in a corresponding cassette of the media storage unit 210-2 is input through the input unit 500-2, the management program (AP) 701-2 extracts a searching range of serial number information SN000001 to SN000005 to be searched among serial number information of media stored in the database 600-2.

FIG. 18 illustrates a process in which, when a single medium located on the uppermost of the corresponding cassette of the media storage unit 210-2 is retrieved and moved to the other cassette, the firmware program 703-2 compares a serial number SN00000X of the medium recognized by the discriminating unit 130-1 with the serial numbers SN000001 to SN000005 of the media stored in the database 600-2. In this case, a case in which there is no serial number that matches the serial number SN00000X of the corresponding medium among the serial numbers SN000001 to SN000005 of the media stored in the database 600-2 is illustrated.

In this case, as shown in FIG. 19, an additional single medium is retrieved from the corresponding cassette and moved to the other cassette, during which the discriminating unit 130-2 recognizes the serial number of the medium. In this case, the firmware program 703-2 compares the serial numbers SN00000X and SN000003) of the media moved to the other cassette with the serial numbers SN000001 to SN000005 of the media stored in the database 600-2. In this case, a case in which a serial number matching the serial number SN000003 of the medium moved second is found among the serial numbers SN000001 to SN000005 stored in the database 600-2 is illustrated.

The control unit 700-2 may perform control such that an additional single medium is retrieved from the corresponding cassette of the media storage unit 210-2 and the medium is passed through the discriminating unit 130-2 such that the serial number of the medium is recognized, and then the medium is moved to the other cassette until a serial number that matches the serial number of the medium moved to the other cassette is found among the serial numbers of the media stored in the corresponding cassette recorded in the database 600-2.

Whether there is a serial number that matches the serial number of the medium moved to the other cassette among the serial numbers of the media stored in the corresponding cassette recorded in the database 600-2 is searched until the number of media retrieved from the corresponding cassette reaches a set number. In one embodiment, the set number may ten.

In this case, when a serial number that matches the serial number of the medium moved to the other cassette is not found among the serial numbers of the media stored in the corresponding cassette recorded in the database 600-2, the control unit 700-2 may perform control such that an additional single medium is retrieved from the corresponding cassette of the media storage unit 210-2 and the medium is passed through the discriminating unit 130-2 such that the serial number of the medium is recognized, and then the medium is moved to the other cassette, and may perform control such that the serial number of the medium moved to the other cassette is compared with the serial numbers of the media stored in the corresponding cassette recorded in the database 600-2 to additionally search for whether there is a matching serial number.

Referring to FIG. 20, when a result of the searching is that there is a serial number that matches the serial number SN000003 of the medium moved to the other cassette in the list of serial numbers SN000001 to SN000005 of media delivered by the management program (AP) 701-2, data SN000001, SN000002, and SN000003 regarding the medium corresponding to the matching serial number SN000003 and the upper medium recorded in the database 600-2 are deleted, and based on the remaining lower media data SN000004 to SN000010, the record of the database 600-2 is updated for the number of media currently stored in the corresponding cassette (seven).

Then, as shown in FIG. 21, the control unit 700-2 transfers the two media in the other cassette to be returned to the corresponding cassette, and adds data of the number (two) of the media returned to the corresponding cassette, to update the record of the database 600-2 with serial number information for the total of nine media.

Meanwhile, when a serial number that matches the serial number of the medium moved to the other cassette is not found among the serial numbers of the media stored in the corresponding cassette recorded in the database 600-2 before the number of media retrieved from the corresponding cassette reaches the set number (ten), the control unit 700-2 may display a media recognition unreliability message for the corresponding cassette on the display unit 800-2 and allow all of the media in the corresponding cassette to pass through the discriminating unit 130-2 for the serial numbers thereof to be recognized so as to update the record of the database 600-2 regarding the number of media stored in the corresponding cassette.

In this case, all of the media retrieved from the corresponding cassette may be moved to and stored in the other cassette, after which all of the media retrieved from the corresponding cassette are allowed to sequentially pass through the discriminating unit 130-2 again, during which the serial numbers of the media are recognized, and then return to the corresponding cassette, and thus the number of media in the corresponding cassette may be recognized.

Hereinafter, a method of verifying the number of media in the media storage unit according to the second embodiment of the present invention will be described with reference to FIG. 22.

First, prior to settlement of media stored in a corresponding cassette of the media storage unit 210-2, all of the media in the corresponding cassette are allowed to move to the other cassette via the discriminating unit 130-2, during which the serial numbers of the media are recognized, and then the serial numbers are recorded in the database 600-2 (S201). The other cassette may be one of the temporary hold unit 120-2, the transit cassette 400-2, and the abnormal bill cassette 220-2, as described above.

When the identification of the media serial numbers for each corresponding cassette is completed, the media stored in the other cassette are returned to and stored in the corresponding cassette (S202).

In response to a failure, such as a jam, occurring in media, and jam failure recovery of the medium storage unit 210-2 being completed (S203), a media number verification command of the media storage unit 210-2 is input (S204).

When the media number verification command is input, a settlement operation of verifying the number of media stored in practice in the corresponding cassette is performed. First, a single medium is retrieved from the corresponding cassette in the media storage unit 210-2 and moved to the other cassette, during which the serial number of the medium is recognized by the discriminating unit 130-2 (S205).

Then, the recognized serial number of the medium is compared with a record of the database 600-2 in which serial numbers of media stored in the corresponding cassette are recorded according to the order in which the media are stored, to search for whether there is a serial number that matches the recognized serial number of the medium (S206).

When a result of the searching in operation S206 is that the matching serial number is found, data of the medium corresponding to the matching serial number and data of an upper medium of the medium recorded in the database 600-2 are deleted, and based on data of lower media remaining after the deleting, the record of the database 600-2 regarding the number of media stored in the corresponding cassette is updated (S207 and S208).

In addition, based on the matching serial number being found, the media in the other cassette are transferred to be returned to the corresponding cassette, and data of the number of the media returned to the corresponding cassette is added to update the record of the database 600-2 again (S209).

When a result of the searching in operations S206 and S207 is that the matching serial number is not found, it is determined whether the number of the media retrieved from the corresponding cassette has reached a set number (S210), and when it is determined that the number of the media retrieved from the corresponding cassette has not reached the set number, an additional single medium is retrieved from the corresponding cassette in the media storage unit 210-2 and allowed to pass through the discriminating unit 130-2 for the serial number of the medium to be recognized, and then is moved to the other cassette (S211), and the process returns to operation S206 of comparing the serial number of the medium moved to the other cassette with the serial numbers of the media stored in the corresponding cassette recorded in the database 600-2 to additionally search for whether there is a matching serial number.

The operation of additionally searching for whether there is a matching serial number is performed until a serial number that matches the serial number of the medium moved to the other cassette is found among the serial numbers of the media stored in the corresponding cassette recorded in the database 600-2.

When a serial number that matches the serial number of the medium moved to the other cassette is not found among the serial numbers of the media stored in the corresponding cassette recorded in the database 600-2 before the number of media retrieved from the corresponding cassette reaches the set number, a media recognition unreliability message for the corresponding cassette is displayed on the display unit 800-2 (S212) and all of the media in the corresponding cassette are allowed to pass through the discriminating unit 130-2 for the serial numbers thereof to be recognized so as to update the record of the database 600-2 regarding the number of media stored in the corresponding cassette (S213).

### Third embodiment

First, referring to FIG. 23, a configuration of an automated teller machine 1-3 to which the third embodiment of the present invention is applied will be described. The automated teller machine 1-3 to which the present invention is applied may include an upper module 10-3 and a lower module 20-3 provided thereunder.

The upper module 10-3 is provided with a depositing unit 110-3, a withdrawing unit 120-3, and a discriminating unit 130-3, the lower module 20-3 is provided with a media storage unit 210-3 in which media are stored and an abnormal bill cassette 220-3, and a replenishing/collecting cassette 400-3 is provided on an outer side of the lower module 20-3. In addition, the automated teller machine 1-3 may include a transporting path 300-3 for transporting banknotes according to various transaction patterns, such as deposit, withdrawal, replenishment, and collection of media in the automated teller machine 1-3, and a plurality of gates for switching the transporting direction of the banknotes to a set direction.

The depositing unit 110-3 provides a space into which deposited media are inserted.

The withdrawal unit 120-3 provides a space to which a medium discriminated as an abnormal bill by the discriminating unit 130-3 in deposit or replenishment of media or a medium discriminated as a normal bill by the discriminating unit 130-3 in withdrawal of media is withdrawn. In the present embodiment, the withdrawal unit 120-3 may provide a space in which media retrieved from the medium storage unit 210-3 are loaded when media number verification of the medium storage unit 210-3 is not possible.

The discriminating unit 130-3 is provided to discriminate the presence or absence of abnormalities and the type of a medium transported along the transporting path 300-3, by detecting the medium passing along the transporting path 300-3 while scanning an image of the medium, to detect the authenticity, type, and damage of the transported medium.

In the present embodiment, the discriminating unit 130-3 serves to recognize the serial number printed on the medium, and transmit information about the recognized serial number of the medium to a control unit 700-3.

The media storage unit 210-3 may include upper drums 211-3, 212-3, 213-3, and 214-3 and lower drums 215-3, 216-3, 217-3, and 218-3 that are stacked one on top of another, and provided as the plurality of upper drums 211-3, 212-3, 213-3, and 214-3 and the plurality of lower drums 215-3, 216-3, 217-3, and 218-3 at positions spaced a predetermined distance from each other in the front-rear direction.

The abnormal bill cassette 220-3 may store a medium discriminated as an abnormal bill by the discriminating unit 130-3 in withdrawal or replenishment of media. In the present embodiment, the abnormal bill cassette 220-3 provides a space in which a medium retrieved from a verification target drum (hereinafter referred to as a corresponding drum) is temporarily stored during media number verification of the media storage unit 210-3.

The replenishing/collecting cassette 400-3 may be selectively detached during replenishment of media to the medium storage unit 210-3 or collection of media from the medium storage unit 210-3.

In the present embodiment, the replenishing/collecting cassette 400-3 provides a space in which a medium retrieved from the media storage unit 210-3 is loaded when media number verification of the medium storage unit 210-3 is not possible.

Referring to FIGS. 23 and 24, an apparatus 2-3 for verifying the number of media of the media storage unit 210-3 according to the first embodiment of the present invention includes an input unit 500-3 for inputting a media number verification command of the media storage unit 210-3, a discriminating unit 130-3 for recognizing serial numbers printed on the media, a database 600-3 in which serial numbers of media stored in each drum of the media storage unit 210-3 are recorded according to the order in which the media are stored, a control unit 700-3 for controlling the operation of components for verifying the number of media, a display unit 800-3 for displaying information and a status of the number of media for each drum, and the media storage unit 210-3, the replenishing/collecting cassette 400-3, and the withdrawal unit 120-3.

The control unit 700-3 may include a management program (AP) 701-3, a middleware program (SP) 702-3, a firmware program (EP) 703-3, and a data update unit 704-3.

When a manager inputs a command to verify the number of media stored in a corresponding drum of the media storage unit 210-3 through the input unit 500-3, the management program (AP) 701-3 transmits a command signal to the middleware program (SP) 702-3 together with media serial number information in a searching range to be searched among media serial number information stored in the database 600-3.

The middleware program (SP) 702-3 serves to interconnect the management program (AP) 701-3 and the firmware program (EP) 703-3 and relay transmission and reception of a command signal and serial number information about media recognized by the discriminating unit 130-3.

The firmware program (EP) 703-3 is configured to, with respect to a medium that is retrieved from a corresponding drum and passes through the discriminating unit 130-3, during which the serial number of the medium is recognized, and then circularly moves to the corresponding drum, receive serial number information of the circularly moved medium and search for whether there is a serial number that matches the serial number of the circularly moved medium in a list of serial number of media transmitted by the management program (AP) 701-3.

The data update unit 704-3 is configured to, when a result of the searching is that there is a serial number that matches the serial number of the circularly moved medium in the list of the serial numbers of the media transmitted by the management program (AP) 701-3, delete data of the medium corresponding to the matching serial number and data of an upper medium of the medium recorded on the database 600-3, and add data of the circularly moved medium to data of lower media that remains after the deleting, to update the record of the database 600-3 regarding the number of media stored in the corresponding drum.

Referring to FIG. 25, information about serial numbers of media is stored in the database 600-3 according to the order in which the media are stored for each drum. In one embodiment, the serial number of a medium may be composed of a combination of letters and Arabic numerals.

For example, referring to FIG. 26, when two $100 media are stored in a drum 211, RC11, serial numbers SN000001 and SN000002 of the media are recorded in the database 600-3. In this case, it can be seen that the medium corresponding to the serial number SN000002 at a lower position is stored in the drum 211, RC11 before the medium corresponding to the serial number SN000001 at a higher position.

FIG. 27 illustrates media information stored in the database 600-3 when ten media are stored in a corresponding drum when a jam occurs, in which serial numbers SN000001 to SN000010 may be recorded in the database 600-3 according to the order in which the ten media are stored.

In the present embodiment, when there is a request to verify the number of media in the media storage unit 210-3, a single medium located on the top in the corresponding drum of the medium storage unit 210-3 is retrieved, the serial number of the retrieved medium is recognized while it passes through the discriminating unit 130-3, and then the medium is circularly moved to the drum and stored therein.

FIG. 28 illustrates a process in which, when a media number verification command of media stored in a corresponding drum of the media storage unit 210-3 is input through the input unit 500-3, the management program (AP) 701-3 extracts a searching range of serial number information SN000001 to SN000005 to be searched among serial number information of media stored in the database 600-3.

FIG. 29 illustrates a process in which, when a single medium located on the top in the corresponding drum of the media storage unit 210-3 is retrieved and circularly moved, the firmware program 703-3 compares a serial number SN00000X of the medium recognized by the discriminating unit 130-3 with the serial numbers SN000001 to SN000005 of the media stored in the database 600-3. In this case, a case in which there is no serial number that matches the serial number SN00000X of the corresponding medium among the serial numbers SN000001 to SN000005 of the media stored in the database 600-3 is illustrated.

In this case, as shown in FIG. 30, two media, which are one more than the previously retrieved medium, are retrieved from the corresponding drum and circularly moved, during which the discriminating unit 130-3 recognizes the serial numbers of the media. In this case, the firmware program 703-3 compares the serial numbers SN00000X and SN000003 of the circularly moved two media with the serial numbers SN000001 to SN000005 of the media stored in the database 600-3. In this case, a case in which a serial number matching the serial number SN000003 of the medium moved on the second is found among the serial numbers SN000001 to SN000005 stored in the database 600-3 is illustrated.

The control unit 700-3 may perform control such that media that are one more than the previously retrieved medium are retrieved from the corresponding drum of the media storage unit 210-3 and the media are passed through the discriminating unit 130-3 such that the serial numbers of the media are recognized, and then the media are circularly moved until a serial number that matches the serial number of the circularly moved media is found among the serial numbers of the media stored in the corresponding drum recorded in the database 600-3. That is, when a matching serial number is not found even after the two media are circularly moved, three media are circularly moved all at one to search for whether there is a matching serial number.

Whether there is a serial number that matches the serial number of the circularly moved medium among the serial numbers of the media stored in the corresponding drum recorded in the database 600-3 is searched until the number of media retrieved from the corresponding drum reaches a set number. In one embodiment, the set number may be ten. That is, the media are circularly moved all at once until the number of media retrieved from the corresponding drum is ten at the most, and whether there is a serial number that matches the serial number of the circularly moved medium is searched.

Referring to FIG. 31, when a result of the searching is that there is a serial number that matches the serial number SN000003 of the circularly moved medium in the list of serial numbers SN000001 to SN000005 of media delivered by the management program (AP) 701-3, data SN000001, SN000002, and SN000003 regarding the medium corresponding to the matching serial number SN000003 and the upper medium recorded in the database 600-3 are deleted, and data of the circularly moved media is added to data of lower data remaining after the deleting, to update the record of the database 600-3 with serial number information for the total of nine media that are stored in the corresponding drum.

On the other hand, when a serial number that matches the serial number of the circularly moved medium is not found among the serial numbers of the media stored in the corresponding drum recorded in the database 600-3 before the number of media retrieved from the corresponding drum reaches the set number (ten), the control unit 700-3 may display a media recognition unreliability message for the corresponding drum on the display unit 800-3 and allow all of the media in the corresponding drum to be circularly moved via the discriminating unit 130-3 for the serial numbers thereof to be recognized so as to update the record of the database 600-3 regarding the number of media stored in the corresponding drum.

In this case, all of the media retrieved from the corresponding drum may be moved to and stored in the replenishing/collecting cassette 400-3, or may be moved to and stored in the withdrawal unit 120-3, after which all of the media retrieved from the corresponding drum are allowed to sequentially pass through the discriminating unit 130-3 again, during which the serial numbers of the media are recognized, and then return to the corresponding drum, and thus the number of the media in the corresponding drum may be recognized.

Hereinafter, a method of verifying the number of media in the media storage unit according to the third embodiment of the present invention will be described with reference to FIG. 32.

First, jam failure recovery of the media storage unit 210-3 is completed (S301), and then a media number verification command of the media storage unit 210-3 is input (S302).

When the media number verification command is input, a single medium is retrieved from a corresponding drum in the media storage unit 210-3 and circularly moved to the corresponding drum, during which the serial number of the medium is recognized by the discriminating unit 130-3 (S303).

Then, the recognized serial number of the medium is compared with a record of the database 600-3 in which serial numbers of media stored in the corresponding drum are recorded according to the order in which the media are stored, to search for whether there is a serial number that matches the recognized serial number of the medium in the record (S304).

When a result of the searching in operation S304 is that the matching serial number is found, data of the medium corresponding to the matching serial number and data of an upper medium of the medium recorded in the database 600-3 are deleted, and data of the circularly moved medium is added to data of lower media remaining after the deleting, to update the record of the database 600-3 regarding the number of media stored in the corresponding drum (S305 and S306).

When a result of the searching in operation S304 is that the matching serial number is not found, it is determined whether the number of the media retrieved from the corresponding drum has reached a set number (S307), and when it is determined that the number of the media retrieved from the corresponding drum has not reached the set number, media one more than the previously retrieved medium are retrieved from the corresponding drum in the media storage unit 210-3 and allowed to pass through the discriminating unit 130-3 for the serial numbers of the media to be recognized, and then are circularly moved to the drum (S308), and the process returns to operation S304 of comparing the serial number of the circularly moved medium with the serial numbers of the media stored in the corresponding drum recorded in the database 600-3 to additionally search for whether there is a matching serial number.

The operation of additionally searching for whether there is a matching serial number is performed until a serial number that matches the serial number of the circularly moved medium is found among the serial numbers of the media stored in the corresponding drum recorded in the database 600-3.

When a serial number that matches the serial number of the circularly moved medium is not found among the serial numbers of the media stored in the corresponding drum recorded in the database 600-3 before the number of media retrieved from the corresponding drum reaches the set number, a media recognition unreliability message for the corresponding drum is displayed on the display unit 800-3 (S309) and all of the media in the corresponding drum are allowed to pass through the discriminating unit 130-3 for the serial numbers thereof to be recognized so as to update the record of the database 600-3 regarding the number of the media stored in the corresponding drum (S310).

As is apparent from the above, according to the method of verifying the number of media in a media storage unit according to the first embodiment of the present invention, after recovery from a jam failure of media is completed, the serial numbers of media can be used to rapidly and accurately verify the number of media stored in a cassette of a media storage unit in practice, and convenience of data management about the number of media for each cassette in the media storage unit can be provided.

According to the method of verifying the number of media in a media storage unit according to the second embodiment of the present invention, the serial numbers of media stored in a recycling type cassette are recognized before a media settlement operation, and thus after recovery from a jam failure of the media is completed, the serial numbers of media can be used to rapidly and accurately verify the number of media stored in a cassette of a media storage unit in practice, and convenience of data management about the number of media for each cassette in the media storage unit can be provided.

According to the method of verifying the number of media in a media storage unit according to the third embodiment of the present invention, after recovery from a jam failure of the media is completed, the serial numbers of media can be used to rapidly and accurately verify the number of media stored in a drum of a media storage unit in practice, and convenience of data management about the number of media for each drum in the media storage unit can be provided.

## Claims

1. A method of verifying a number of media in a media storage unit (210-1), the method comprising:
while retrieving a medium from a media storage unit and moving the medium, recognizing, by a discriminating unit (130-1), a serial number of the medium;
comparing the serial number of the medium recognized by the discriminating unit with a record of a database (600-1) in which serial numbers of media stored in the media storage unit are recorded according to an order in which the media are stored, and searching for whether there is a serial number that matches the recognized serial number of the medium; and
when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding media storage unit;
wherein:
the recognizing of the serial number of the medium includes, while retrieving a single medium from a corresponding cassette of the medium storage unit and moving the retrieved single medium to an abnormal bill cassette (220-1), recognizing, by the discriminating unit, a serial number of the retrieved single medium;
the searching for whether there is a matching serial number includes comparing the recognized serial number of the medium with the record of the database in which serial numbers of media stored in the corresponding cassette are recorded according to an order in which the media are stored, and searching for whether there is a serial number that matches the recognized serial number; and
the updating of the record of the database includes, when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding cassette,
further comprising, when a result of the searching is that the matching serial number is found,
transferring the medium in the abnormal bill cassette (220-1) to be returned to the corresponding cassette; and adding data of the number of the medium returned to the corresponding cassette, to update the record of the database, and
further comprising: when a result of the searching is that the matching serial number is not found,
additionally retrieving a single medium from the corresponding cassette of the medium storage unit, allowing the single medium to pass through the discriminating unit for a serial number thereof to be recognized, and then moving the single medium to the abnormal bill cassette; and
comparing the serial number of the medium moved to the abnormal bill cassette with the serial numbers of the media stored in the corresponding cassette recorded in the database, and additionally searching for whether there is a serial number that matches the recognized serial number.

2. The method of claim 1, wherein the additional searching for whether there is a matching serial number is performed until a serial number that matches the serial number of the medium moved to the abnormal bill cassette is found among the serial numbers of the media stored in the corresponding cassette recorded in the database.

3. The method of claim 2, further comprising: when a serial number that matches the serial number of the medium moved to the abnormal bill cassette is not found among the serial numbers of the media stored in the corresponding cassette recorded in the database before a number of media retrieved from the corresponding cassette reaches a set number,
displaying a media recognition unreliability message for the corresponding cassette on a display unit; and
allowing all of the media of the corresponding cassette to pass through the discriminating unit for the serial numbers thereof to be recognized so as to update the record of the database regarding the number of the media stored in the corresponding cassette.

4. A method of verifying a number of media in a media storage uni (210-1), the method comprising:
while retrieving a medium from a media storage unit and moving the medium, recognizing, by a discriminating unit (130-1), a serial number of the medium;
comparing the serial number of the medium recognized by the discriminating unit with a record of a database (600-1) in which serial numbers of media stored in the media storage unit are recorded according to the order in which the media are stored, and searching for whether there is a serial number that matches the recognized serial number of the medium; and
when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding media storage unit;
wherein:
the recording of the serial numbers of the media includes, prior to settlement of media stored in a corresponding cassette of the media storage unit, while moving all of the media of the corresponding cassette to another cassette via the discriminating unit, recognizing serial numbers of the media, and then recording the serial numbers in the database;
the recognizing of the serial numbers of the media includes, at the time of settlement of the media stored in the corresponding cassette, while retrieving a single medium from the corresponding cassette and moving the retrieved single medium to the other cassette, recognizing, by the discriminating unit, a serial number of the single retrieved medium;
the searching for whether there is a matching serial number includes comparing the recognized serial number of the medium with the record of the database in which the serial numbers of the media stored in the corresponding cassette are recorded, and searching for whether there is a serial number that matches the recognized serial number; and
the updating of the record of the database includes, when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding cassette;
further comprising, when a result of the searching is that the matching serial number is found,
transferring the medium in the other cassette to be returned to the corresponding cassette; and adding data of the number of the medium returned to the corresponding cassette, to update the record of the database, and
further comprising: when a result of the searching is that the matching serial number is not found,
additionally retrieving a single medium from the corresponding cassette of the medium storage unit, allowing the single medium to pass through the discriminating unit for a serial number thereof to be recognized and then moving the single medium to the other cassette; and
comparing the serial number of the medium moved to the other cassette with the serial numbers of the media stored in the corresponding cassette recorded in the database, and additionally searching for whether there is a serial number that matches the serial number of the medium moved to the other cassette.

5. The method of claim 4, wherein the additional searching for whether there is the matching serial number is performed until a serial number that matches the serial number of the medium moved to the other cassette is found among the serial numbers of the media stored in the corresponding cassette recorded in the database.

6. The method of claim 5, further comprising, when a serial number that matches the serial number of the medium moved to the other cassette is not found among the serial numbers of the media stored in the corresponding cassette recorded in the database before a number of media retrieved from the corresponding cassette reaches a set number,
displaying a media recognition unreliability message for the corresponding cassette on a display unit; and
allowing all of the media of the corresponding cassette to pass through the discriminating unit for the serial numbers thereof to be recognized so as to update the record of the database regarding the number of the media stored in the corresponding cassette.

7. A method of verifying a number of media in a media storage unit, the method comprising:
while retrieving a medium from a media storage unit and moving the medium, recognizing, by a discriminating unit, a serial number of the medium;
comparing the serial number of the medium recognized by the discriminating unit with a record of a database in which serial numbers of media stored in the media storage unit are recorded according to the order in which the media are stored, and searching for whether there is a serial number that matches the recognized serial number of the medium; and
when a result of the searching is that the matching serial number is found, deleting data of the medium corresponding to the matching serial number and data of an upper medium of the medium recorded on the database, and based on data of lower media that remain after the deleting, updating the record of the database regarding a number of the media stored in the corresponding media storage unit;
wherein:
the recognizing of the serial number of the medium includes, while retrieving a medium from a drum of the media storage unit and circularly moving the retrieved medium, recognizing, by the discriminating unit, a serial number of the medium;
the searching for whether there is a matching serial number includes comparing the recognized serial number of the medium with the record of the database in which serial numbers of media stored in the drum are recorded according to an order in which the media are stored, and searching for whether there is a serial number that matches the recognized serial number; and
the updating of the record of the database includes, when a result of the searching is that the matching serial number is found, deleting data of the medium corresponding to the matching serial number and data of an upper medium of the medium recorded on the database, and adding data of the number of the circularly moved medium to data of lower media that remain after the deleting, to update the record of the database regarding the number of the media stored in the drum-;
further comprising: when a result of the searching is that the matching serial number is not found,
retrieving media one more than the previously retrieved medium from the drum of the medium storage unit, allowing the retrieved media to pass through the discriminating unit for serial numbers thereof to be recognized, and then circularly moving the media to the drum; and
comparing the serial number of the medium circularly moved to the drum with the serial numbers of the media stored in the drum recorded in the database, and additionally searching for whether there is a serial number that matches the serial number of the medium circularly moved to the drum.

8. The method of claim 7, wherein the additional searching for whether there is a matching serial number is performed until a serial number that matches the serial number of the medium circularly moved to the drum is found among the serial numbers of the media stored in the drum recorded in the database.

9. The method of claim 8, further comprising, when a serial number that matches the serial number of the medium circularly moved to the drum is not found among the serial numbers of the media stored in the drum recorded in the database before a number of media retrieved from the drum reaches a set number,
displaying a media recognition unreliability message for the drum on a display unit; and
allowing all of the media of the drum to pass through the discriminating unit for the serial numbers thereof to be recognized so as to update the record of the database regarding the number of the media stored in the drum.

## Patentansprüche

1. Verfahren zur Überprüfung einer Anzahl von Medien in einer Medienlagereinheit (210-1), das Verfahren umfassend:
beim Entnehmen eines Mediums aus einer Medienlagereinheit und Bewegen des Mediums, Erkennen einer Seriennummer des Mediums durch eine Diskriminierungseinheit (130-1);
Vergleichen der durch die Diskriminierungseinheit erkannten Seriennummer des Mediums mit einem Datensatz einer Datenbank (600-1), in der Seriennummern von in der Medienlagereinheit gelagerten Medien gemäß einer Reihenfolge, in der die Medien gelagert sind, erfasst sind, und Suchen, ob es eine Seriennummer gibt, die mit der erkannten Seriennummer des Mediums übereinstimmt; und
wenn ein Ergebnis der Suche ist, dass die übereinstimmende Seriennummer gefunden wurde, Löschen von Daten des Mediums, das der übereinstimmenden Seriennummer entspricht, und Daten eines oberen Mediums des in der Datenbank erfassten Mediums, und basierend auf Daten von unteren Medien, die nach dem Löschen verbleiben, Aktualisieren des Datensatzes der Datenbank in Bezug auf eine Anzahl der in der entsprechenden Medienlagereinheit gelagerten Medien;
wobei:
das Erkennen der Seriennummer des Mediums, während ein einzelnes Medium aus einer entsprechenden Kassette der Medienlagereinheit entnommen und das entnommene einzelne Medium in eine Kassette (220-1) anormaler Banknoten bewegt wird, das Erkennen einer Seriennummer des entnommenen einzelnen Mediums durch die Diskriminierungseinheit umfasst;
das Suchen nach einer übereinstimmenden Seriennummer das Vergleichen der erkannten Seriennummer des Mediums mit dem Datensatz der Datenbank, in der Seriennummern von Medien, die in der entsprechenden Kassette gelagert sind, gemäß einer Reihenfolge, in der die Medien gelagert sind, erfasst sind, und das Suchen nach einer Seriennummer, die der erkannten Seriennummer entspricht, umfasst; und
das Aktualisieren des Datensatzes umfasst, dass dann, wenn ein Ergebnis der Suche ist, dass die übereinstimmende Seriennummer gefunden wurde, Daten des Mediums, das der übereinstimmenden Seriennummer entspricht, und Daten eines oberen Mediums des in der Datenbank erfassten Mediums gelöscht werden, und basierend auf Daten von unteren Medien, die nach dem Löschen verbleiben, der Datensatz der Datenbank in Bezug auf eine Anzahl der in der entsprechenden Kassette gelagerten Medien aktualisiert wird,
ferner umfassend, wenn ein Ergebnis der Suche ist, dass die übereinstimmende Seriennummer gefunden wurde,
Übertragen des Mediums in der Kassette (220-1) anormaler Banknoten, das zu der entsprechenden Kassette zurückgeführt werden soll; und Hinzufügen von Daten der Anzahl des zu der entsprechenden Kassette zurückgeführten Mediums, um den Datensatz der Datenbank zu aktualisieren, und
ferner umfassend: wenn ein Ergebnis der Suche ist, dass die übereinstimmende Seriennummer nicht gefunden wurde,
zusätzliches Entnehmen eines einzelnen Mediums aus der entsprechenden Kassette der Medienlagereinheit, Erlauben des Durchlaufens der Diskriminierungseinheit durch das einzelne Medium, damit eine Seriennummer davon erkannt wird, und dann Bewegen des einzelnen Mediums zu der Kassette anormaler Banknoten; und
Vergleichen der Seriennummer des zu der Kassette anormaler Banknoten bewegten Mediums mit den Seriennummern der in der entsprechenden Kassette, die in der Datenbank erfasst ist, gelagerten Medien, und zusätzlich Suchen, ob es eine Seriennummer gibt, die mit der erkannten Seriennummer übereinstimmt.

2. Verfahren nach Patentanspruch 1, wobei das zusätzliche Suchen nach einer übereinstimmenden Seriennummer durchgeführt wird, bis eine Seriennummer, die mit der Seriennummer des in die Kassette anormaler Banknoten bewegten Mediums übereinstimmt, unter den in der Datenbank erfassten Seriennummern der in der entsprechenden Kassette gelagerten Medien gefunden wird.

3. Verfahren nach Patentanspruch 2, ferner umfassend: wenn eine Seriennummer, die mit der Seriennummer des in die Kassette anormaler Banknoten bewegten Mediums übereinstimmt, nicht unter den in der Datenbank erfassten Seriennummern der in der entsprechenden Kassette gelagerten Medien gefunden wird, bevor eine Anzahl von aus der entsprechenden Kassette entnommenen Medien eine festgelegte Anzahl erreicht,
Anzeigen einer Medienerkennungsunzuverlässigkeitsmeldung für die entsprechende Kassette auf einer Anzeigeeinheit; und
Erlauben, dass alle Medien der entsprechenden Kassette die Diskriminierungseinheit durchlaufen, damit deren Seriennummern erkannt werden, um den Datensatz der Datenbank hinsichtlich der Anzahl der in der entsprechenden Kassette gelagerten Medien zu aktualisieren.

4. Verfahren zur Überprüfung einer Anzahl von Medien in einer Medienlagereinheit (210-1), das Verfahren umfassend:
beim Entnehmen eines Mediums aus einer Medienlagereinheit und Bewegen des Mediums, Erkennen einer Seriennummer des Mediums durch eine Diskriminierungseinheit (130-1);
Vergleichen der durch die Diskriminierungseinheit erkannten Seriennummer des Mediums mit einem Datensatz einer Datenbank (600-1), in der Seriennummern von Medien, die in der Medienlagereinheit gelagert sind, gemäß der Reihenfolge, in der die Medien gelagert sind, erfasst sind, und Suchen, ob es eine Seriennummer gibt, die mit der erkannten Seriennummer des Mediums übereinstimmt; und
wenn ein Ergebnis der Suche ist, dass die übereinstimmende Seriennummer gefunden wurde, Löschen von Daten des Mediums, das der übereinstimmenden Seriennummer entspricht, und Daten eines oberen Mediums des in der Datenbank erfassten Mediums, und basierend auf Daten von unteren Medien, die nach dem Löschen verbleiben, Aktualisieren des Datensatzes der Datenbank in Bezug auf eine Anzahl der in der entsprechenden Medienlagereinheit gelagerten Medien;
wobei:
das Erfassen der Seriennummern der Medien vor der Abrechnung von in einer entsprechenden Kassette der Medienlagereinheit gelagerten Medien, während alle Medien der entsprechenden Kassette über die Diskriminierungseinheit in eine andere Kassette bewegt werden, das Erkennen von Seriennummern der Medien und dann das Erfassen der Seriennummern in der Datenbank umfasst;
das Erkennen der Seriennummern der Medien zum Zeitpunkt der Abrechnung der in der entsprechenden Kassette gelagerten Medien, während ein einzelnes Medium aus der entsprechenden Kassette entnommen und das entnommene einzelne Medium in die andere Kassette bewegt wird, das Erkennen einer Seriennummer des einzelnen entnommenen Mediums durch die Diskriminierungseinheit umfasst;
das Suchen nach einer übereinstimmenden Seriennummer das Vergleichen der erkannten Seriennummer des Mediums mit dem Datensatz der Datenbank, in der die Seriennummern der in der entsprechenden Kassette gelagerten Medien erfasst sind, und das Suchen nach einer Seriennummer, die mit der erkannten Seriennummer übereinstimmt, umfasst; und
das Aktualisieren des Datensatzes umfasst, dass dann, wenn ein Ergebnis der Suche ist, dass die übereinstimmende Seriennummer gefunden wurde, Daten des Mediums, das der übereinstimmenden Seriennummer entspricht, und Daten eines oberen Mediums des in der Datenbank erfassten Mediums gelöscht werden, und basierend auf Daten von unteren Medien, die nach dem Löschen verbleiben, der Datensatz der Datenbank in Bezug auf eine Anzahl der in der entsprechenden Kassette gelagerten Medien aktualisiert wird;
ferner umfassend, wenn ein Ergebnis der Suche ist, dass die übereinstimmende Seriennummer gefunden wurde,
Übertragen des Mediums in der anderen Kassette, das zurückgeführt werden soll, zu der entsprechenden Kassette; und Hinzufügen von Daten der Anzahl des zu der entsprechenden Kassette zurückgeführten Mediums, um den Datensatz der Datenbank zu aktualisieren, und
ferner umfassend: wenn ein Ergebnis der Suche ist, dass die übereinstimmende Seriennummer nicht gefunden wurde,
zusätzliches Entnehmen eines einzelnen Mediums aus der entsprechenden Kassette der Medienlagereinheit, Erlauben, dass das einzelne Medium die Diskriminierungseinheit durchläuft, damit eine Seriennummer davon erkannt wird, und dann Bewegen des einzelnen Mediums zu der anderen Kassette; und
Vergleichen der Seriennummer des zu der anderen Kassette bewegten Mediums mit den in der Datenbank erfassten Seriennummern der in der entsprechenden Kassette gelagerten Banknoten und zusätzlich Suchen, ob es eine Seriennummer gibt, die mit der Seriennummer des zu der anderen Kassette bewegten Mediums übereinstimmt.

5. Verfahren nach Patentanspruch 4, wobei die zusätzliche Suche nach der übereinstimmenden Seriennummer durchgeführt wird, bis eine Seriennummer, die mit der Seriennummer des in die andere Kassette bewegten Mediums übereinstimmt, unter den in der Datenbank erfassten Seriennummern der in der entsprechenden Kassette gelagerten Medien gefunden wird.

6. Verfahren nach Patentanspruch 5, ferner umfassend, wenn eine Seriennummer, die mit der Seriennummer des zu der anderen Kassette bewegten Mediums übereinstimmt, nicht unter den in der Datenbank erfassten Seriennummern der in der entsprechenden Kassette gelagerten Medien gefunden wird, bevor eine Anzahl von aus der entsprechenden Kassette entnommenen Medien eine festgelegte Anzahl erreicht,
Anzeigen einer Medienerkennungsunzuverlässigkeitsmeldung für die entsprechende Kassette auf einer Anzeigeeinheit; und
Erlauben, dass alle Medien der entsprechenden Kassette die Diskriminierungseinheit durchlaufen, damit deren Seriennummern erkannt werden, um den Datensatz der Datenbank hinsichtlich der Anzahl der in der entsprechenden Kassette gelagerten Medien zu aktualisieren.

7. Verfahren zur Überprüfung einer Anzahl von Medien in einer Medienlagereinheit, das Verfahren umfassend:
beim Entnehmen eines Mediums aus einer Medienlagereinheit und Bewegen des Mediums, Erkennen einer Seriennummer des Mediums durch eine Diskriminierungseinheit;
Vergleichen der durch die Diskriminierungseinheit erkannten Seriennummer des Mediums mit einem Datensatz einer Datenbank, in der Seriennummern von Medien, die in der Medienlagereinheit gelagert sind, gemäß der Reihenfolge, in der die Medien gelagert sind, erfasst sind, und Suchen, ob es eine Seriennummer gibt, die mit der erkannten Seriennummer des Mediums übereinstimmt; und
wenn ein Ergebnis der Suche ist, dass die übereinstimmende Seriennummer gefunden wurde, Löschen von Daten des Mediums, das der übereinstimmenden Seriennummer entspricht, und Daten eines oberen Mediums des in der Datenbank erfassten Mediums, und basierend auf Daten von unteren Medien, die nach dem Löschen verbleiben, Aktualisieren des Datensatzes der Datenbank in Bezug auf eine Anzahl der in der entsprechenden Medienlagereinheit gelagerten Medien;
wobei:
das Erkennen der Seriennummer des Mediums, während ein Medium aus einer Trommel der Medienlagereinheit entnommen und das entnommene Medium kreisförmig bewegt wird, das Erkennen einer Seriennummer des Mediums durch die Diskriminierungseinheit umfasst;
das Suchen nach einer übereinstimmenden Seriennummer das Vergleichen der erkannten Seriennummer des Mediums mit dem Datensatz der Datenbank, in der Seriennummern von Medien, die in der Trommel gelagert sind, gemäß einer Reihenfolge, in der die Medien gelagert sind, erfasst sind, und das Suchen nach einer Seriennummer, die der erkannten Seriennummer entspricht, umfasst; und
das Aktualisieren des Datensatzes der Datenbank umfasst, dass dann, wenn ein Ergebnis der Suche ist, dass die übereinstimmende Seriennummer gefunden wurde, Daten des Mediums, das der übereinstimmenden Seriennummer entspricht, und Daten eines oberen Mediums des in der Datenbank erfassten Mediums gelöscht werden, und Daten der Anzahl des kreisförmig bewegten Mediums zu Daten von unteren Medien, die nach dem Löschen verbleiben, hinzugefügt werden, um den Datensatz der Datenbank in Bezug auf die Anzahl der in der Trommel gelagerten Medien zu aktualisieren;
ferner umfassend: wenn ein Ergebnis der Suche ist, dass die übereinstimmende Seriennummer nicht gefunden wurde,
Entnehmen von einem Medium mehr als das zuvor aus der Trommel der Medienlagereinheit entnommene Medium, wodurch erlaubt wird, dass die entnommenen Medien die Diskriminierungseinheit durchlaufen, damit deren Seriennummern erkannt werden, und anschließend kreisförmiges Bewegen der Medien zu der Trommel; und
Vergleichen der Seriennummer des kreisförmig zu der Trommel bewegten Mediums mit den Seriennummern der in der Trommel, die in der Datenbank erfasst ist, gelagerten Banknoten, und zusätzlich Suchen, ob es eine Seriennummer gibt, die mit der Seriennummer des kreisförmig zu der Trommel bewegten Mediums übereinstimmt.

8. Verfahren nach Patentanspruch 7, wobei das zusätzliche Suchen nach einer übereinstimmenden Seriennummer durchgeführt wird, bis eine Seriennummer, die mit der Seriennummer des kreisförmig zu der Trommel bewegten Mediums übereinstimmt, unter den in der Datenbank erfassten Seriennummern der in der Trommel gelagerten Medien gefunden wird.

9. Verfahren nach Patentanspruch 8, ferner umfassend, wenn eine Seriennummer, die mit der Seriennummer des kreisförmig zu der Trommel bewegten Mediums übereinstimmt, nicht unter den in der Datenbank erfassten Seriennummern der in der Trommel gelagerten Medien gefunden wird, bevor eine Anzahl von aus der Trommel entnommenen Medien eine festgelegte Anzahl erreicht,
Anzeigen einer Medienerkennungsunzuverlässigkeitsmeldung für die Trommel auf einer Anzeigeeinheit; und
Ermöglichen, dass alle Medien der Trommel die Diskriminierungseinheit durchlaufen, damit deren Seriennummern erkannt werden, um den Datensatz der Datenbank hinsichtlich der Anzahl der in der Trommel gelagerten Medien zu aktualisieren.

## Revendications

1. Procédé de vérification d'un nombre de supports dans une unité de stockage de supports (210-1), le procédé comprenant :
lors du retrait d'un support d'une unité de stockage de supports et du déplacement du support, la reconnaissance, par une unité de discrimination (130-1), d'un numéro de série du support ;
la comparaison du numéro de série du support reconnu par l'unité de discrimination avec un enregistrement d'une base de données (600-1) dans laquelle les numéros de série des supports stockés dans l'unité de stockage de supports sont enregistrés selon un ordre dans lequel les supports sont stockés, et la recherche de l'existence d'un numéro de série correspondant au numéro de série reconnu du support ; et
lorsqu'un résultat de la recherche est qu'un numéro de série correspondant est trouvé, la suppression des données du support correspondant au numéro de série correspondant et des données d'un support supérieur du support enregistrées dans la base de données, et, sur la base des données des supports inférieurs restant après la suppression, la mise à jour de l'enregistrement de la base de données concernant un nombre de supports stockés dans l'unité de stockage de supports correspondante ;
dans lequel :
la reconnaissance du numéro de série du support comprend, lors du retrait d'un support unique d'une cassette correspondante de l'unité de stockage de supports et du déplacement du support unique retiré vers une cassette de billets anormaux (220-1), la reconnaissance, par l'unité de discrimination, d'un numéro de série du support unique retiré ;
la recherche de l'existence d'un numéro de série correspondant comprend la comparaison du numéro de série reconnu du support avec l'enregistrement de la base de données dans laquelle les numéros de série des supports stockés dans la cassette correspondante sont enregistrés selon un ordre dans lequel les supports sont stockés, et la recherche de l'existence d'un numéro de série correspondant au numéro de série reconnu ; et
la mise à jour de l'enregistrement de la base de données comprend, lorsqu'un résultat de la recherche est qu'un numéro de série correspondant est trouvé, la suppression des données du support correspondant au numéro de série correspondant et des données d'un support supérieur du support enregistrées dans la base de données, et, sur la base des données des supports inférieurs restant après la suppression, la mise à jour de l'enregistrement de la base de données concernant un nombre de supports stockés dans la cassette correspondante,
comprenant en outre, lorsqu'un résultat de la recherche est qu'un numéro de série correspondant est trouvé,
le transfert du support dans la cassette de billets anormaux (220-1) pour être ramené dans la cassette correspondante ; et l'ajout des données du nombre du support ramené dans la cassette correspondante, afin de mettre à jour l'enregistrement de la base de données, et
comprenant en outre : lorsqu'un résultat de la recherche est qu'aucun numéro de série correspondant n'est trouvé,
le retrait supplémentaire d'un support unique de la cassette correspondante de l'unité de stockage de supports, l'autorisation du passage du support unique par l'unité de discrimination pour que son numéro de série soit reconnu, et puis le déplacement du support unique vers la cassette de billets anormaux ; et
la comparaison du numéro de série du support déplacé vers la cassette de billets anormaux avec les numéros de série des supports stockés dans la cassette correspondante enregistrés dans la base de données, et la recherche supplémentaire de l'existence d'un numéro de série correspondant au numéro de série reconnu.

2. Procédé selon la revendication 1, dans lequel la recherche supplémentaire de l'existence d'un numéro de série correspondant est effectuée jusqu'à ce qu'un numéro de série correspondant au numéro de série du support déplacé vers la cassette de billets anormaux soit trouvé parmi les numéros de série des supports stockés dans la cassette correspondante enregistrés dans la base de données.

3. Procédé selon la revendication 2, comprenant en outre : lorsqu'aucun numéro de série correspondant au numéro de série du support déplacé vers la cassette de billets anormaux n'est trouvé parmi les numéros de série des supports stockés dans la cassette correspondante enregistrés dans la base de données avant qu'un nombre de supports retirés de la cassette correspondante n'atteigne un nombre défini,
l'affichage d'un message d'incertitude de reconnaissance de support pour la cassette correspondante sur une unité d'affichage ; et
l'autorisation du passage de tous les supports de la cassette correspondante par l'unité de discrimination pour que leurs numéros de série soient reconnus afin de mettre à jour l'enregistrement de la base de données concernant le nombre de supports stockés dans la cassette correspondante.

4. Procédé de vérification d'un nombre de supports dans une unité de stockage de supports (210-1), le procédé comprenant :
lors du retrait d'un support d'une unité de stockage de supports et du déplacement du support, la reconnaissance, par une unité de discrimination (130-1), d'un numéro de série du support ;
la comparaison du numéro de série du support reconnu par l'unité de discrimination avec un enregistrement d'une base de données (600-1) dans laquelle les numéros de série des supports stockés dans l'unité de stockage de supports sont enregistrés selon l'ordre dans lequel les supports sont stockés, et la recherche de l'existence d'un numéro de série correspondant au numéro de série reconnu du support ; et
lorsqu'un résultat de la recherche indique qu'un numéro de série correspondant est trouvé, la suppression des données du support correspondant au numéro de série correspondant et des données d'un support supérieur du support enregistrées dans la base de données, et, sur la base des données des supports inférieurs restantes après la suppression, la mise à jour de l'enregistrement de la base de données concernant un nombre de supports stockés dans l'unité de stockage de supports correspondante ;
dans lequel :
l'enregistrement des numéros de série des supports comprend, avant la régularisation des supports stockés dans une cassette correspondante de l'unité de stockage de supports, lors du déplacement de tous les supports de la cassette correspondante vers une autre cassette via l'unité de discrimination, la reconnaissance des numéros de série des supports, et puis enregistrement des numéros de série dans la base de données ;
la reconnaissance des numéros de série des supports comprend, au moment de la régularisation des supports stockés dans la cassette correspondante, lors du retrait d'un seul support de la cassette correspondante et du déplacement du support unique retiré vers l'autre cassette, la reconnaissance, par l'unité de discrimination, d'un numéro de série du support unique retiré ;
la recherche de l'existence d'un numéro de série correspondant comprend la comparaison du numéro de série reconnu du support avec l'enregistrement de la base de données dans lequel les numéros de série des supports stockés dans la cassette correspondante sont enregistrés, et la recherche de l'existence d'un numéro de série correspondant au numéro de série reconnu ; et
la mise à jour de l'enregistrement de la base de données comprend, lorsqu'un résultat de la recherche indique qu'un numéro de série correspondant est trouvé, la suppression des données du support correspondant au numéro de série correspondant et des données d'un support supérieur du support enregistrées dans la base de données, et, sur la base des données des supports inférieurs restantes après la suppression, la mise à jour de l'enregistrement de la base de données concernant un nombre de supports stockés dans la cassette correspondante ;
comprenant en outre, lorsqu'un résultat de la recherche indique qu'un numéro de série correspondant est trouvé,
le transfert du support dans l'autre cassette pour être ramené dans la cassette correspondante ; et l'ajout des données du nombre du support ramené dans la cassette correspondante, pour mettre à jour l'enregistrement de la base de données, et
comprenant en outre : lorsqu'un résultat de la recherche indique qu'aucun numéro de série correspondant n'est trouvé,
le retrait supplémentaire d'un seul support de la cassette correspondante de l'unité de stockage de supports, l'autorisation du passage du support unique par l'unité de discrimination pour que son numéro de série soit reconnu et puis le déplacement du support unique vers l'autre cassette ; et
la comparaison du numéro de série du support déplacé vers l'autre cassette avec les numéros de série des supports stockés dans la cassette correspondante enregistrés dans la base de données, et la recherche supplémentaire de l'existence d'un numéro de série correspondant au numéro de série du support déplacé vers l'autre cassette.

5. Procédé selon la revendication 4, dans lequel la recherche supplémentaire de l'existence d'un numéro de série correspondant est effectuée jusqu'à ce qu'un numéro de série correspondant au numéro de série du support déplacé vers l'autre cassette soit trouvé parmi les numéros de série des supports stockés dans la cassette correspondante enregistrés dans la base de données.

6. Procédé selon la revendication 5, comprenant en outre, lorsqu'aucun numéro de série correspondant au numéro de série du support déplacé vers l'autre cassette n'est trouvé parmi les numéros de série des supports stockés dans la cassette correspondante enregistrés dans la base de données avant qu'un nombre de supports retirés de la cassette correspondante n'atteigne un nombre défini,
l'affichage d'un message d'incertitude de reconnaissance de support pour la cassette correspondante sur une unité d'affichage ; et
l'autorisation du passage de tous les supports de la cassette correspondante par l'unité de discrimination pour que leurs numéros de série soient reconnus afin de mettre à jour l'enregistrement de la base de données concernant le nombre de supports stockés dans la cassette correspondante.

7. Procédé de vérification d'un nombre de supports dans une unité de stockage de supports, le procédé comprenant :
lors du retrait d'un support d'une unité de stockage de supports et du déplacement du support, la reconnaissance, par une unité de discrimination, d'un numéro de série du support ;
la comparaison du numéro de série du support reconnu par l'unité de discrimination avec un enregistrement d'une base de données dans laquelle les numéros de série des supports stockés dans l'unité de stockage de supports sont enregistrés selon l'ordre dans lequel les supports sont stockés, et la recherche de l'existence d'un numéro de série correspondant au numéro de série reconnu du support ; et
lorsqu'un résultat de la recherche est que le numéro de série correspondant est trouvé, la suppression des données du support correspondant au numéro de série correspondant et des données d'un support supérieur du support enregistrées dans la base de données, et, sur la base des données des supports inférieurs restantes après la suppression, la mise à jour de l'enregistrement de la base de données concernant un nombre des supports stockés dans l'unité de stockage de supports correspondante ;
dans lequel :
la reconnaissance du numéro de série du support comprend, lors du retrait d'un support d'un tambour de l'unité de stockage de supports et du déplacement circulaire du support retiré, la reconnaissance, par l'unité de discrimination, d'un numéro de série du support ;
la recherche de l'existence d'un numéro de série correspondant comprend la comparaison du numéro de série reconnu du support avec l'enregistrement de la base de données dans laquelle les numéros de série des supports stockés dans le tambour sont enregistrés selon un ordre dans lequel les supports sont stockés, et la recherche de l'existence d'un numéro de série correspondant au numéro de série reconnu ; et
la mise à jour de l'enregistrement de la base de données comprend, lorsqu'un résultat de la recherche est que le numéro de série correspondant est trouvé, la suppression des données du support correspondant au numéro de série correspondant et des données d'un support supérieur du support enregistrées dans la base de données, et l'ajout des données du nombre du support déplacé circulairement aux données des supports inférieurs restantes après la suppression, afin de mettre à jour l'enregistrement de la base de données concernant le nombre des supports stockés dans le tambour ;
comprenant en outre : lorsqu'un résultat de la recherche est que le numéro de série correspondant n'est pas trouvé,
le retrait d'un support de plus que le support précédemment retiré du tambour de l'unité de stockage de supports, l'autorisation du passage des supports retirés par l'unité de discrimination pour que leurs numéros de série soient reconnus, et puis le déplacement circulaire des supports vers le tambour ; et
la comparaison du numéro de série du support déplacé circulairement vers le tambour avec les numéros de série des supports stockés dans le tambour enregistrés dans la base de données, et la recherche supplémentaire de l'existence d'un numéro de série correspondant au numéro de série du support déplacé circulairement vers le tambour.

8. Procédé selon la revendication 7, dans lequel la recherche supplémentaire de l'existence d'un numéro de série correspondant est effectuée jusqu'à ce qu'un numéro de série correspondant au numéro de série du support déplacé circulairement vers le tambour soit trouvé parmi les numéros de série des supports stockés dans le tambour enregistrés dans la base de données.

9. Procédé selon la revendication 8, comprenant en outre, lorsqu'un numéro de série correspondant au numéro de série du support déplacé circulairement vers le tambour n'est pas trouvé parmi les numéros de série des supports stockés dans le tambour enregistrés dans la base de données avant qu'un nombre de supports retirés du tambour n'atteigne un nombre défini,
l'affichage d'un message d'incertitude de reconnaissance de support pour le tambour sur une unité d'affichage ; et
l'autorisation du passage de l'ensemble des supports du tambour par l'unité de discrimination pour que leurs numéros de série soient reconnus afin de mettre à jour l'enregistrement de la base de données concernant le nombre des supports stockés dans le tambour.
